# EUROPEAN PATENT APPLICATION

(11) **EP 4 564 527 A1**
(43) Date of publication of application: **04.06.2025**
(21) Application number: 24192144.4
(22) Date of filing: 31.07.2024
(51) Int. Cl.: H01M 10/613, H01M 10/6555, H01M 10/6556, H01M 10/6569, H01M 50/209, H01M 10/6557

(54) **SOAKING PARTITION, DIRECT COOLING PLATE, AND BATTERY MODULE**

(30) Priority: 28.11.2023 CN 202323256700 U; 28.11.2023 CN 202323247384 U; 28.11.2023 CN 202323238142 U; 28.11.2023 CN 202311614686; 28.11.2023 CN 202323256677 U; 16.01.2024 WO PCT/CN2024/072512
(71) Applicant: Eve Power Co., Ltd., Jingmen, Hubei 448000 (CN)
(72) Inventor: TAN, Jianpeng, Jingmen, Hubei, 448000 (CN); ZHAO, Hongwan, Jingmen, Hubei, 448000 (CN); YUAN, Dingding, Jingmen, Hubei, 448000 (CN); GUO, Jiahao, Jingmen, Hubei, 448000 (CN); CHE, Liyuan, Jingmen, Hubei, 448000 (CN); HE, Meng, Jingmen, Hubei, 448000 (CN); LIU, Hanxiang, Jingmen, Hubei, 448000 (CN)
(74) Representative: Murgitroyd & Company

(57) **Abstract**

A soaking partition, a direct cooling plate, and a battery module are provided. The soaking partition includes: a housing, where at least a portion of an inner cavity of the housing is configured as a closed cavity, and a wall surrounding the closed cavity includes a first side wall and a second side wall; and a capillary element bonded to at least a portion of an inner surface of the first side wall or the second side wall, where at least a portion of the capillary element is in contact with a cooling medium in the closed cavity.

## Description

### TECHNICAL FIELD

The present disclosure relates to the field of battery technologies, and more particular to a soaking partition, a direct cooling plate, and a battery module.

### BACKGROUND

In the field of battery technologies, battery capacity and charging-discharging ratio are key factors affecting the performance of an energy storage battery. Increasing of the battery capacity and the charging-discharging ratio is a hot spot in the current market. As the capacity of the battery is greatly increased, calorification and difficulty of the passive heat dissipation of the battery become higher and higher, and a temperature difference between the batteries becomes larger. For example, the batteries are divided into three areas, i.e., an upper area, a middle area, and a lower area, where a temperature of the upper area is greater than a temperature of the middle area that is greater than a temperature of the lower area, and the temperature difference between the temperature of the upper area and the temperature of the lower area is in a range of 10°C to 20°C. Such a significant temperature difference may affect the cycle life of the batteries. In particular, after the batteries are assembled to form a battery module, the heat dissipation difficulty of the batteries will be further increased.

In the related art, a heat conduction partition is sandwiched between individual batteries of the battery module, a liquid cooling plate is provided at the bottom of the battery module, and heat emitted from each of the batteries is transferred to the liquid cooling plate by the heat conduction partition and taken away by the liquid cooling plate.

However, the above heat conduction partition cannot solve the problem of larger temperature difference between different areas of the battery, thereby affecting the cycle life of the battery

### SUMMARY

Embodiments of the present disclosure provide a soaking partition, a direct cooling plate, and a battery module, which can improve the problem of larger temperature difference between different areas of the battery.

In a first aspect, embodiments of the present disclosure provide a soaking partition for a battery module, the battery module including the soaking partition, one or more batteries, and a direct cooling plate, and the soaking partition being disposed between any two ones of the batteries, where the soaking partition includes: a first housing provided with a hollow first cavity, where at least a portion of the first cavity is configured as a closed cavity, and a wall surrounding the closed cavity includes a first side wall in contact with one of the two batteries and a second side wall in contact with another one of the two batteries; a cooling medium placed in the closed cavity; and a capillary element bonded to at least a portion of an inner surface of the first side wall or at least a portion of an inner surface of the second side wall, where at least a portion of the capillary element is in contact with the cooling medium; where the first housing includes opposite first and second ends, and the second end of the first housing is connected to the direct cooling plate.

In a second aspect, the embodiments of the present disclosure provide a battery module, including: the soaking partition of any one of the above embodiments; and a direct cooling plate including both a top cover and a base connected with the top cover, where the top cover of the direct cooling plate is connected to one end of the soaking partition, the base is provided with a fluid passage, and a plurality of protrusions are provided at a side surface of the top cover away from the soaking partition and disposed in the fluid passage.

In a third aspect, embodiments of the present disclosure provide a direct cooling plate connected to one end of the soaking partition of any one of the above embodiments, including: a second housing provided with a hollow accommodating cavity; a passage tube disposed in the accommodating cavity, where an inner cavity of the passage tube defines a fluid passage for flowing a direct cooling medium; and a heat conduction medium for filling a gap between the passage tube and the second housing.

In a fourth aspect, the present disclosure provides a battery module, including: a group of batteries including a plurality of batteries arranged in a first direction; and a soaking partition assembly including a soaking partition disposed between two adjacent ones of the batteries; where the soaking partition is the soaking partition of any one of the above embodiments, the capillary element of the soaking partition includes a primary capillary structure and a secondary capillary structure, the primary capillary structure and the secondary capillary structure are spaced apart in the first cavity of the soaking partition, and a cross-sectional area of the primary capillary structure is greater than a cross-sectional area of the secondary capillary structure.

In a fifth aspect, embodiments of the present disclosure provide a battery module, including: a bottom plate; a plurality of batteries each including a shell, where the shell has opposite top and bottom surfaces, the bottom surface is further provided with a reinforcing structure for connection to the bottom plate, and a surface area of the reinforcing structure is greater than an area of an orthographic projection of the reinforcing structure on the top surface; and a soaking partition disposed between any two ones of the batteries, where the soaking partition is the soaking partition of any one of the above embodiments.

The beneficial effects of the present disclosure are as follows:

(1) in the soaking partition of the present disclosure, the soaking partition is configured to separate a first battery and a second battery, where at least a portion of the cavity of the soaking partition is configured as the closed cavity, and the wall surrounding the closed cavity includes the first side wall in contact with the first battery and the second side wall in contact with the second battery, the cooling medium is placed in the closed cavity of the soaking partition, heat generated by the first battery and the second battery may be conducted to the soaking partition through the first side wall and the second side wall, respectively, and a portion of the liquid cooling medium inside the soaking partition absorbs the heat and then vaporizes, so as to be rapidly diffused inside the entire closed cavity, the vaporized cooling medium is cooled by contacting the direct cooling plate at the second end of the housing to form a condensed liquid, and the condensed cooling medium is diffused over the inner wall of the housing through the capillary element, so that the inner wall of the housing forms a soaking structure. Another portion of the liquid cooling medium inside the soaking partition is diffused by the capillary element after absorbing the heat, so that the temperature of each of areas in which the closed cavity of the soaking partition is located is close to the same. Correspondingly, the temperature of the battery contacting the different areas of the soaking partition tends to be consistent after performing heat exchange with the soaking partition, thereby effectively reducing the problem that the temperature difference between the different areas of the battery is larger.

(2) in the battery module provided in the present disclosure, the battery module includes the above soaking partition and the direct cooling plate, where the soaking partition in the battery module is configured to separate a first battery and a second battery, heat generated by the first battery and the second battery are conducted to the soaking partition through the first side wall and the second side wall, respectively. The soaking partition is configured to improve the problem of the larger temperature difference of the battery. The plurality of protrusions are further provided at the top cover and used for increasing a contact area between a direct cooling medium and the top cover. Since heat conducted from the first battery and the second battery to the soaking partition is mainly dissipated through the top cover of the direct cooling plate, the plurality of protrusions are provided on the top cover, which is beneficial for improving heat transfer efficiency of the top cover and the direct cooling medium and further improving a heat absorption effect of the top cover on the soaking partition.

(3) in the direct cooling plate provided in the present disclosure, the direct cooling plate is connected to one end of the soaking partition, and the passage tube and a heat absorbing medium are provided inside the housing of the direct cooling plate, where an inner cavity of the passage tube defines a fluid passage for flowing the direct cooling medium, the heat absorbing medium fills the gap between the passage tube and the housing, the heat generated by the battery is conducted to the soaking partition and then conducted to the housing of the direct cooling plate through the soaking partition. The heat conduction medium can rapidly absorb heat from the housing, and then conduct the heat to the passage tube. By providing the heat conduction medium inside the direct cooling plate, the heat absorbing performance of the direct cooling plate can be effectively improved, thereby effectively alleviating a problem of serious calorification of the battery.

(4) in the battery module provided by the present disclosure, the battery module includes the soaking partition assembly including the soaking partition, the primary capillary structure and the secondary capillary structure are spaced apart inside the soaking partition, the secondary capillary structure is used for absorbing a heat exchange medium between adjacent primary capillary structures, the primary capillary structure is combined with the secondary capillary structure inside the soaking partition, so that a coverage area of the capillary structure inside the soaking partition is increased, and the heat conduction rate of the heat exchange medium in the soaking partition can be accelerated to improve the heat exchange efficiency of the soaking partition. The present disclosure is to improve the heat transfer rate of the battery module by setting the soaking partition having a high heat transfer efficiency between adjacent two ones of the batteries, so as to improve the uniformity of the temperature of the battery and improve the overall performance of the battery module.

(5) in the battery module provided in the present disclosure, the reinforcing structure is provided at the bottom surface of each of the batteries of the battery module and bonded to the bottom plate, and a surface area of the reinforcing structure is greater than an area of an orthographic projection of the reinforcing structure on the top surface, so that the bonding area between the battery and the bottom plate is increased. Therefore, a stable connection is formed between the battery and the bottom plate, and the battery and the bottom plate of the battery module are not loosened in the case of shaking or dithering of the battery module or the influence of the high-temperature environment inside the battery module. Further, the soaking partition is further provided between adjacent ones of the batteries, and high-temperature heat generated by the batteries is further transferred to the soaking partition, which is used to improve the problem of the larger temperature difference of the batteries.

### DESCRIPTION OF THE DRAWINGS

FIG. 1 is a schematic diagram of a portion of a structure of a battery module according to some embodiments of the present disclosure.
FIG. 2 is a schematic diagram of a structure in which a soaking partition is connected to a direct cooling plate according to some embodiments of the present disclosure.
FIG. 3 is a partially enlarged view of FIG. 2.
FIG. 4 is a schematic diagram of another structure in which a soaking partition is connected to a direct cooling plate according to some embodiments of the present disclosure.
FIG. 5 is a schematic diagram of yet another structure in which a soaking partition is connected to a direct cooling plate according to some embodiments of the present disclosure.
FIG. 6 is a front view of a housing of a soaking partition according to some embodiments of the present disclosure.
FIG. 7 is a top view of a housing of a soaking partition according to some embodiments of the present disclosure.
FIG. 8 is a schematic structural diagram of a soaking partition according to some embodiments of the present disclosure.
FIG. 9 is an exploded view of FIG. 8.
FIG. 10 is another schematic structural diagram of a soaking partition according to some embodiments of the present disclosure.
FIG. 11 is an exploded view of FIG. 10.
FIG. 12 is a schematic structural diagram of a base of a direct cooling plate according to some embodiments of the present disclosure.
FIG. 13 is another schematic structural diagram of a base of a direct cooling plate according to some embodiments of the present disclosure.
FIG. 14 is a schematic structural diagram of a top cover of a direct cooling plate according to some embodiments of the present disclosure.
FIG. 15 is another schematic structural diagram of a top cover of a direct cooling plate according to some embodiments of the present disclosure.
FIG. 16 is a schematic structural diagram of a battery module according to some embodiments of the present application.
FIG. 17 is another schematic structural diagram of a battery module according to some embodiments of the present application.
FIG. 18 is a perspective diagram of a battery module according to some embodiments of the present disclosure.
FIG. 19 is a schematic sectional view of a direct cooling plate according to some embodiments of the present disclosure.
FIG. 20 is another schematic sectional diagram of a direct cooling plate according to some embodiments of the present disclosure.
FIG. 21 is yet another schematic sectional diagram of a direct cooling plate according to some embodiments of the present disclosure.
FIG. 22 is a schematic diagram of a structure in which a direct cooling plate is connected to a soaking partition according to some embodiments of the present disclosure.
FIG. 23 is a schematic diagram of another structure in which a direct cooling plate is connected to a soaking partition according to some embodiments of the present disclosure.
FIG. 24 is a schematic structural diagram of a battery module according to some embodiments of the present application.
FIG. 25 is another schematic structural diagram of a soaking partition assembly according to some embodiments of the present disclosure.
FIG. 26 is a schematic diagram of an internal structure of a soaking partition according to some embodiments of the present disclosure.
FIG. 27 is a schematic cross-sectional view of a soaking partition according to some embodiments of the present disclosure.
FIG. 28 is another schematic cross-sectional view of a soaking partition according to some embodiments of the present disclosure.
FIG. 29 is a schematic diagram of a partial structure of a battery module according to some embodiments of the present disclosure.
FIG. 30 is a schematic cross-sectional view of a soaking partition assembly according to some embodiments of the present disclosure.
FIG. 31 is another schematic cross-sectional view of a soaking partition assembly according to some embodiments of the present disclosure.
FIG. 32 is an exploded view of a partial structure of a battery module according to some embodiments of the present disclosure.
FIG. 33 is a perspective diagram of a battery according to some embodiments of the present disclosure.
FIG. 34 is a front diagram of a battery according to some embodiments of the present disclosure.
FIG. 35 is a partially enlarged view of FIG. 34.
FIG. 36 is a schematic structural diagram of a reinforcing structure according to some embodiments of the present application.
FIG. 37 is another schematic structural diagram of a reinforcing structure according to some embodiments of the present application.
FIG. 38 is yet another schematic structural diagram of a reinforcing structure according to some embodiments of the present application.
FIG. 39 is a front diagram of a battery according to some embodiments of the present disclosure.
FIG. 40 is a perspective diagram of a battery according to some embodiments of the present disclosure.
FIG. 41 is a schematic diagram of a structure in which a reinforcing structure is connected to a bottom plate according to some embodiments of the present disclosure.
FIG. 42 is a schematic diagram of another structure in which a reinforcing structure is connected to a bottom plate according to some embodiments of the present disclosure.

REFERENCE SIGNS:
100. Battery module;
10. Battery; 11. First battery; 12. Second battery; 110. A group of batteries; 111. First group of batteries; 112. Second group of batteries; 113. Third group of batteries; 114. Fourth group of batteries;
20a. Soaking partition; 21a. First housing; 211. First end; 212. Second end; 213. Top wall; 215. Opening; 216a. Bottom wall; 221. First side wall; 222. Second side wall; 223. First inner surface; 224. Second inner surface; 23. Inner cavity; 231. First cavity; 232. Second cavity; 233. Third cavity; 24a. Capillary element; 241. First capillary element; 242. Second capillary element; 243. End of the capillary element; 251. First partition; 252. Second partition; 261. First inlet; 262. First outlet;
210. First soaking plate; 220. Second soaking plate; 230. Cooling plate; 27. Sealing plate;
30a. Direct cooling plate; 31a. Top cover; 311. Protrusion; 312. First side surface; 313. Second side surface; 32a. Base; 331. Second inlet; 332. Second outlet; 34. Flow passage;
40. Liquid inlet tube; 41. Main liquid inlet tube; 42. Branch liquid inlet tube; 43. Interface;
50. Liquid outlet tube; 51. Main liquid outlet tube; 52. Branch liquid outlet tube; 53. Joint;
60. Cooling medium; 61. Cooling equalizing medium; 62. Direct cooling medium;
30b: Direct cooling plate; 31. Second housing; 31b. First side plate; 314. First surface; 315. Second surface; 32b. Second side plate; 35. Accommodating cavity; 36. Passage tube; 63. Heat conduction medium; 371. First inlet; 372. First outlet; 38. Fluid passage; 381. First flow passage; 382. Second flow passage;
20b. Soaking partition; 221. First side wall; 223. First inner surface; 222. Second side wall; 224. Second inner surface; 213. Top wall; 215b. Opening end; 216. Bottom wall; 23. Inner cavity; 24b. Capillary element; 241. First capillary element; 242. Second capillary element;
200. Soaking partition assembly; 20c. Soaking partition; 201. Top portion; 202. Bottom portion; 21c. First housing; 2111. First cover plate; 2112. Second cover plate; 24c. Capillary elements; 244. Primary capillary structure; 245. Secondary capillary structure; 28. Support assembly; 281. Support block; 2821. First gap; 2822. Second gap; 290. Anticorrosive film layer; 291. Hydrophilic film layer; 216c. Soaking bottom plate; 2161. A plurality of grooves; 240. Soaking side plate; 250. Buffer layer; 300. Heat exchanger; 310. Liquid cooling plate; 320. Heat dissipation fin;
120. Case body; 121. Case cover; 122. Side plate; 123. Bottom plate;
10. Battery; 13. Shell; 131. Top surface; 132. Bottom surface; 1321. First side; 1322, Second side; 14. Reinforcing structure; 141. First projection; 1411. Wave peak; 1412. Wave valley; 1413. First type of projection; 1414. Second type of projection; 70. Adhesive layer.

### DETAILED DESCRIPTION

### A first embodiment

The first embodiment of the present disclosure provides a battery module 100 including a plurality of batteries arranged in a matrix, which may be a cylindrical battery module or a square battery module. Specifically, the battery module 100 includes a first direction X and a second direction Y perpendicular to the first direction X, where a plurality of batteries 10 are arranged side by side in the first direction X to form a group of batteries, and a plurality of groups of batteries 10 are arranged side by side in the second direction Y to form a layer of battery module 100. In an alternative example, the battery module 100 may include a single-layer battery module, a double-layer battery module, or a multi-layer battery module.

The battery module 100 includes a case body and a case cover, where a plurality of batteries 10 are arranged in a matrix inside the case body, and the case cover is used to cover an opening end of the case body.

In the field of battery technologies, capacity and charging-discharging ratio of the battery module 100 are key factors affecting the performance of an energy storage battery module 100. Increasing of the capacity and the charging-discharging ratio of the battery module 100 is a hot spot in the current market. However, the volume of the battery module 100 cannot be increased, and the capacity of the battery module 100 can only be increased by increasing the capacity of the batteries 10. As the capacity of the battery 10 is greatly increased, calorification and difficulty of the passive heat dissipation of the battery 10 become higher and higher, and a temperature difference between the batteries 10 becomes larger. For example, the batteries 10 are divided into three areas, i.e., an upper area, a middle area, and a lower area, where a temperature of the upper area is greater than a temperature of the middle area that is greater than a temperature of the lower area, and the temperature difference between the temperature of the upper area and the temperature of the lower area is in a range of 10°C to 20°C. Such a temperature difference may affect the cycle life of the batteries 10. In particular, after the batteries are assembled to form a battery module, the heat dissipation difficulty of the batteries will be further increased.

In the related art, a heat conduction partition is sandwiched between individual batteries 10 of the battery module 100, a liquid cooling plate is provided at the bottom of the battery module 100, and heat emitted from each of the batteries 10 is transferred to the liquid cooling plate by the heat conduction partition and taken away by the liquid cooling plate.

However, the above heat conduction partition cannot solve the problem of larger temperature difference between different areas of the batteries 10, thereby affecting the cycle life of the batteries 10.

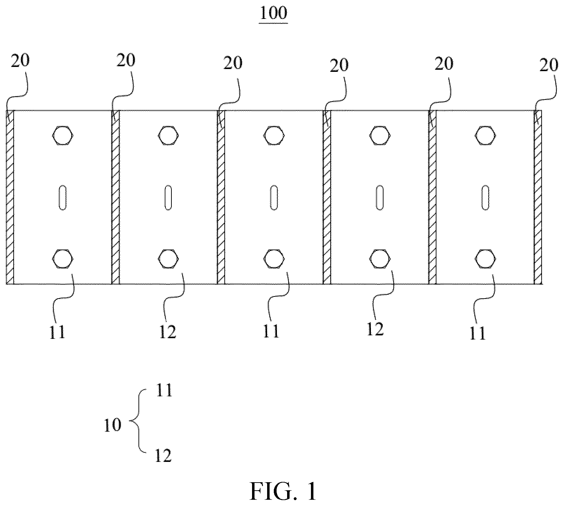

A square battery module 100 is taken as an example. Referring to FIGS. 1, 2, 16 and 17, there is provided a soaking partition 20 in some embodiments of the present disclosure. The battery module 100 includes a plurality of groups of batteries arranged side-by-side in a second direction Y, where each group of the plurality of groups of batteries includes a plurality of batteries 10 arranged side-by-side in a first direction X. Further, each group of batteries includes a plurality of first batteries 11 and a plurality of second batteries 12, where each of the first batteries 11 is adjacent to corresponding one of the second batteries 12, and a soaking partition 20 is arranged between each of the first batteries 11 and corresponding one of the second batteries 12 adjacent to the first battery 11.

The soaking partition 20 includes a first housing 21a, where the first housing 21a includes a first side wall 221 in contact with the first battery 11 and a second side wall 222 in contact with the second battery 12. The first housing 21a is provided with a hollow inner cavity 23, where at least a portion of the inner cavity 23 is configured as a closed cavity, and a wall surrounding the closed cavity includes a first side wall 221 and a second side wall 222. A cooling medium 60 is provided in the closed cavity. Further, the soaking partition further includes a capillary element 24, where the capillary element 24 is bonded to at least a portion of an inner wall of the first housing 21a and at least a portion of the capillary element 24 is in contact with the cooling medium 60. The soaking partition 20 is configured in a hollow square plate-like structure, and the first housing 21a includes opposite first and second ends 211 and 212, where the second end 212 of the first housing 21a is connected to a direct cooling plate 30a.

In comparison with the heat conduction partition in the related art, the soaking partition 20, in addition to being capable of conducting heat absorbed from the first battery 11 and the second battery 12 to the direct cooling plate 30a, is provided with a hollow structure in which the cooling medium 60 can be circularly diffused, and the soaking partition 20 is beneficial to reducing the temperature difference of the battery 10.

The first battery 11 is taken as example in the operation of the battery module 100, where the heat generated by the first battery 11 is conducted to the first side wall 221 to cause a temperature of the side wall 221 to rise rapidly, so that a heat source region and a cooling region are formed in the cavity. The heat source region can be understood as a region of the cavity away from the direct cooling plate 30a, and the cooling region is a region of the cavity close to the direct cooling plate 30a. The heat source region and the cooling region have significant temperature variations, i.e. the temperature of the heat source region may be significantly higher than that of the cooling region.

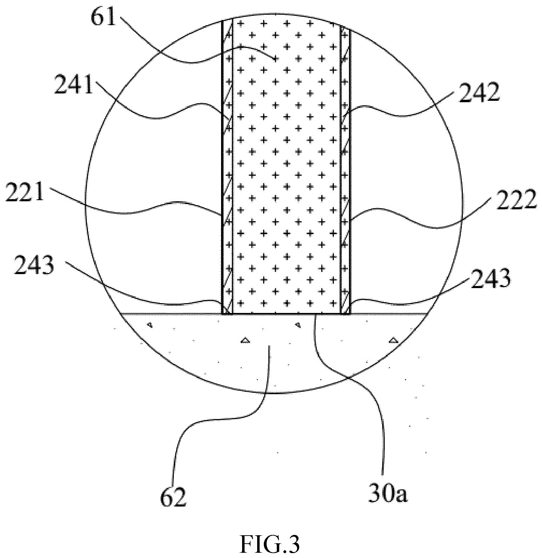

As shown in FIG. 3, at least a portion of the capillary element 24 is in contact with the cooling medium 60, which may be understood that an end 243 of the capillary element 24 is surrounded by the cooling medium 60. The cooling medium 60 undergoes counter-gravity movement and is diffused from the lowest point towards the highest point under the action of the capillary phenomenon. The cooling medium 60 in the capillary element 24, which in this case is a liquid medium, absorbs heat energy in the heat source region and is changed from a liquid medium to a vapor medium, the vapor medium rapidly fills the entire cavity, the vapor medium enters the cooling region and then is rapidly condensed, and a counter-gravity transportation is performed for the condensed cooling medium 60 by means of the capillary element 24. The cooling medium 60 is returned to the vicinity of the heat source region and then continues to absorb the heat generated by the battery, thereby effecting vapor-liquid circulation.

By using the soaking partition 20 to improve heat dissipation, the temperature in the upper region of the battery is prevented from being excessively high, so that the temperatures in the upper, middle, and lower regions of the battery are approximately balanced.

The soaking partition 20 is used for separating the first battery 11 and the second battery 12, where at least a portion of the cavity of the soaking partition 20 is configured as the closed cavity, and the wall surrounding the closed cavity includes the first side wall 221 in contact with the first battery 11 and the second side wall 222 in contact with the second battery 12, the cooling medium 60 is placed in the closed cavity of the soaking partition 20, heat generated by the first battery 11 and the second battery 12 may be conducted to the soaking partition 20 through the first side wall 221 and the second side wall 222, respectively, and a portion of the liquid cooling medium 60 inside the soaking partition 20 absorbs the heat and then vaporizes, so as to be rapidly diffused inside the entire closed cavity, the vaporized cooling medium 60 is cooled by contacting the direct cooling plate 30a at the second end 212 of the first housing 21a to form a condensed liquid, and the condensed cooling medium 60 is diffused over the inner wall of the housing through the capillary element 24, so that the inner wall of the first housing 21a forms a soaking structure. Another portion of the liquid cooling medium 60 inside the soaking partition 20 is diffused by the capillary element 24 after absorbing the heat, so that the temperature of each of areas in which the closed cavity of the soaking partition 20 is located is close to the same. Correspondingly, the temperature of the battery contacting the different areas of the soaking partition 20 tends to be consistent after performing heat exchange with the soaking partition 20, thereby effectively reducing the problem that the temperature difference between the different areas of the battery is larger.

The capillary element 24 of the present disclosure is mainly a structure designed on the basis of the theory of capillary phenomenon, which is a well-known phenomenon. The capillary phenomenon (sometimes referred to as capillary action, capillary movement, capillary rise, capillary effect or wicking) is a process in which a liquid flows in a narrow space without the help of any external force or performs a counter-gravity movement in comparison with an external force such as gravity.

This effect may occur between brush hairs of a brush, in a tubule, in porous materials such as paper and gypsum, in some non-porous materials such as sand and liquefied carbon fibers, or in a biological cell. It occurs due to intermolecular forces between the liquid and the surface of the surrounding solid. If the diameter of a tube is small enough, the surface tension (caused by cohesion within the liquid) and the adhesion between the liquid and the container wall act together to push the liquid.

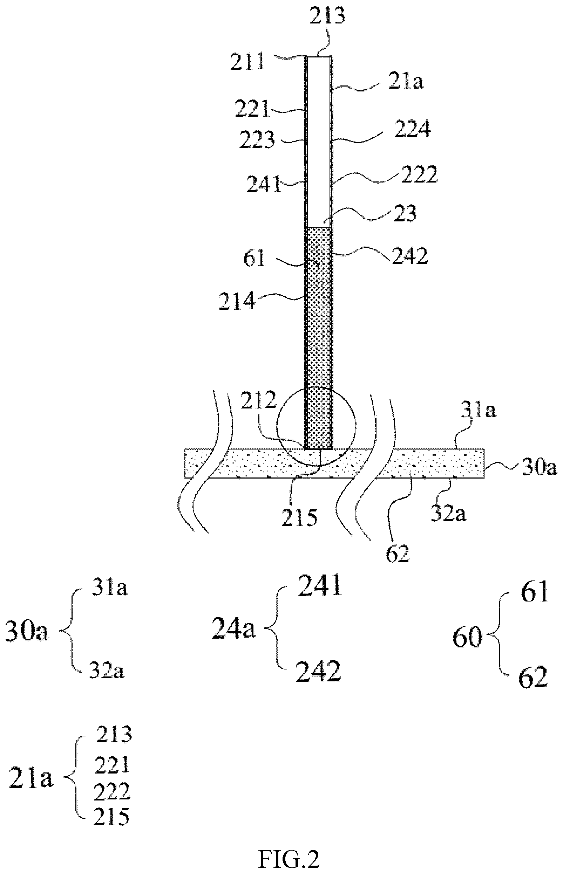

Further, in some embodiments provided in the present disclosure, as shown in FIG. 2, the entire inner cavity 23 of the soaking partition 20 is configured as a closed cavity, the first housing 21a includes a top wall 213 disposed at the first end 211, the first housing 21a further includes a plurality of side walls connected to the top wall 213, the second end 212 of the first housing 21a may be configured as an opening end, the cooling medium 60 is injected into the inner cavity 23 of the first housing 21a through the opening 215 of the second end 212, and then the second end 212 of the first housing 21a is welded to the direct cooling plate 30a, so that the inner cavity 23 of the soaking partition 20 is configured as a sealed cavity.

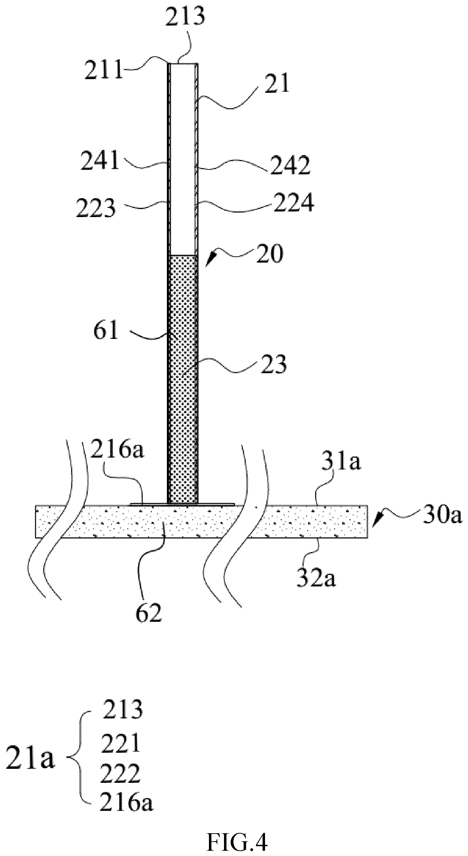

In yet another embodiment provided in the present disclosure, as shown in FIG. 4, the soaking partition 20 is configured as a hollow inverted T-shaped plate-like structure. Unlike the above-described embodiment, the second end 212 of the first housing 21a is provided with a bottom wall 216a disposed opposite to the top wall 213, the cooling medium 60 is injected into the inner cavity 23 of the first housing 21a through the opening 215 of the second end 212, and the bottom wall 216a is welded to the second end 212 of the first housing 21a, so that the inner cavity 23 of the soaking partition 20 is configured as a sealed cavity, and the bottom wall 216a is further connected to the direct cooling plate 30a, where the bottom wall 216a is connected to the direct cooling plate 30a in such a manner of welding, clamping or bonding connections.

The cooling medium 60 inside the soaking partition 20 is in heat exchange with the direct cooling plate 30a at the second end 212. When the second end 212 of the soaking partition 20 is provided with the bottom wall 216a, an orthographic projection of the bottom wall 216a on the direct cooling plate 30a is greater than that of the top wall 213 on the direct cooling plate 30a. By increasing a contact area between the bottom wall 216a and the direct cooling plate 30a, the heat exchange efficiency between the soaking partition 20 and the direct cooling plate 30a can be increased.

The cooling medium 60 includes a liquid or a refrigerant, which may be Freon or ammonia, or the like. The cooling medium 60 is configured to perform circulation between a liquid phase and a vapor phase. An initial state of the cooling medium 60 is a liquid state. When the heat generated by the first battery 11 and the second battery 12 is transferred to a liquid cooling medium 60, the liquid cooling medium 60 absorbs the heat to convert the cooling medium 60 into a vapor cooling medium 60, and the vapor cooling medium 60 is rapidly circulated and diffused in the closed cavity of the soaking partition 20. Therefore, even if a local temperature of the battery 10 is too high, after the local heat generated by the battery 10 is transferred to the cooling medium 60, the cooling medium 60 is vaporized and rapidly diffused into the entire sealed cavity of the soaking partition 20. Since the soaking partition 20 is integrally constructed as a soaking plate-like structure, the local heat generated by the battery 10 performs sufficient heat exchange with the soaking partition 20 to enable the local temperature of the battery 10 to be configured to be the same as the entire temperature of the battery 10.

The first housing 21a may be made of a metal material that facilitates heat conduction. Suitable metal materials include copper, aluminum, titanium, stainless steel, and the like. The first housing 21a may also be made of a composite metal material. Suitable composite metal materials include a copper-aluminum composite material or a copper-nickel composite material.

The dimension of the soaking partition 20 can be adaptively adjusted according to the dimension of the battery module 100. For example, when the volume of the battery module 100 is larger, the dimension of the soaking partition 20 can be increased accordingly, and the wall thickness of the first housing 21a of the soaking partition 20 and the volume of the inner cavity 23 of the soaking partition 20 can be increased accordingly, thereby increasing the heat conduction and the soaking effect of the soaking partition 20. When the volume of the battery module 100 is smaller, the dimension of the soaking partition 20 is decreased accordingly, and the wall thickness of the first housing 21a of the soaking partition 20 and the volume of the inner cavity 23 of the soaking partition 20 is decreased accordingly, thereby facilitating the miniaturization of the battery module 100.

In further embodiments, the soaking partition 20 can improve the heat dissipation effect of the battery module 100, as shown in FIGS. 2 and 3. Specifically, the inner cavity 23 of the soaking partition 20 is provided with a capillary element 24, the first side wall 221 includes a first inner surface 223, the second side wall 222 includes a second inner surface 224, and the inner cavity 23 of the soaking partition 20 is provided with a first capillary element 241 and a second capillary element 242, where the first capillary element 241 is bonded to the first inner surface 223, the second capillary element 242 is bonded to the second inner surface 224, the liquid cooling medium 60 can be rapidly diffused on the first inner surface 223 through the first capillary element 241, and the liquid cooling medium 60 can be rapidly diffused on the second inner surface 224 through the second capillary element 242.

After the vapor cooling medium 60 is in contact with the direct cooling plate 30a at the second end 212 of the first housing 21a, the vapor cooling medium 60 is condensed into the liquid cooling medium 60 after being cooled by the direct cooling plate 30a. During condensation of the cooling medium 60, the heat carried by the vapor cooling medium 60 is transferred to the direct cooling plate 30a, and the condensed cooling medium 60 is flowed on the first inner surface 223 through the first capillary element 241, thereby cooling the first inner surface 223 and cooling the first battery 11 through the wall on which the first inner surface 223 is located, and the condensed cooling medium 60 is flowed on the second inner surface 224 through the second capillary element 242, thereby cooling the second inner surface 224 and cooling the second battery 12 through the wall on which the second inner surface 224 is located.

The capillary element 24 may be made of a fibrous cotton material, where the fibrous cotton material is bonded to the inner surface of the soaking partition 20, and the inner portion of the fibrous cotton material has a rich network structure, thereby facilitating rapid flow of the liquid cooling medium 60 inside the fibrous cotton.

The capillary element 24 may also be formed by mixing a metal powder with a solution to form a metal powder slurry, where the metal powder slurry is bonded to the inner wall of the soaking separator 20 by a spraying process. A suitable metal powder includes a copper powder, which has good hydrophilicity. The capillary structure formed by the copper powder is not only strong in capillary force but also good in heat conduction, so that the heat dissipation effect of the soaking partition 20 can be effectively improved.

In the present disclosure, the cooling medium 60 includes a direct cooling medium 62 and a cooling equalizing medium 61, where the direct cooling medium 62 is defined to be flowed into an inlet of a flow passage and flowed out from an outlet of the flow passage, and the cooling equalizing medium 61 is defined to added into the sealed cavity and configured to flow only inside the cavity. The cooling equalizing medium 61 includes a liquid or a refrigerant, which may be Freon or ammonia, or the like. The cooling equalizing medium 61 has a liquid phase and a vapor phase. The liquid cooling equalizing medium 61 is converted into a vapor cooling equalizing medium 61 after heat absorption, and the vapor cooling equalizing medium 61 is rapidly diffused in its accommodating space so that the temperature difference of the accommodating space in which the cooling equalizing medium 61 is located is relatively small. The direct cooling medium 62 includes a liquid or air, and the direct cooling medium 62 carries away the heat by means of flowability of the direct cooling medium 62 after heat absorption, thereby dissipating heat from the battery module 100.

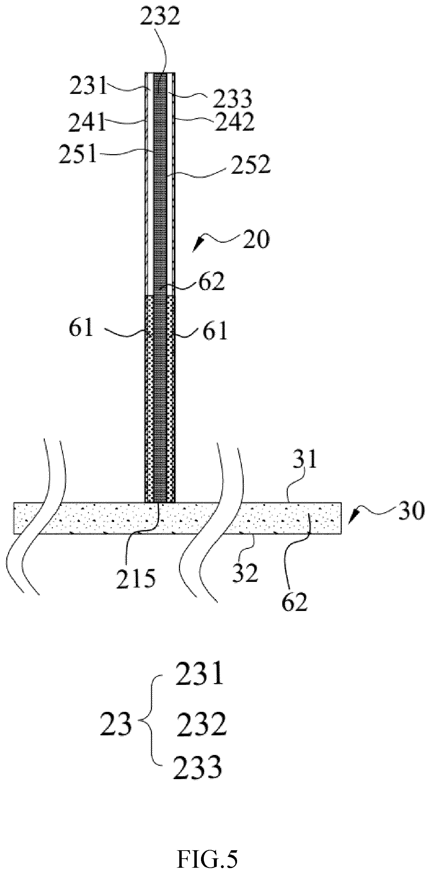

In still another embodiment provided in the present disclosure, as shown in FIG. 5, a portion of the inner cavity of the soaking partition 20 is configured as a closed cavity in which a first cooling medium is provided, and another portion of the inner cavity of the soaking partition 20 is configured as a direct cooling plate in which a second cooling medium is provided. Specifically, a first partition 251 and a second partition 252 are spaced apart inside the soaking partition 20, and the inner cavity 23 of the first housing 21a is divided into a first cavity 231, a second cavity 232, and a third cavity 233 successively, where the first partition 251 is used for separating the first cavity 231 and the second cavity 232, and the second partition 252 is used for separating the second cavity 232 and the third cavity 233.

The first cavity 231 and the second cavity 232 are configured as a closed cavity, the first cavity 231 is disposed adjacent to the first battery 11, the third cavity 233 is disposed adjacent to the second battery 12, the first cooling medium is disposed inside both the first cavity 231 and the third cavity 233, and the second cooling medium is disposed inside the second cavity 232, where the first cooling medium is configured as the cooling equalizing medium 61, the second cooling medium is configured as the direct cooling medium 62, the cooling equalizing medium 61 disposed inside the first cavity 231 is configured to flow only inside the first cavity 231, the cooling equalizing medium 61 disposed inside the third cavity 233 is configured to flow only inside the third cavity 233, and the direct cooling medium 62 disposed inside the second cavity 232 is configured to be flowed into from the outside of the second cavity 232, and the direct cooling medium 62 is configured to be flowed out into the outside of the second cavity 232.

In further preferred embodiments, on the premise that the dimension of the soaking partition 20b is maintained in a suitable dimension range, a suitable volume ratio is set between the first cavity 231, the second cavity 232 and the third cavity 233, that is, a ratio of the volume of the first cavity 231: the volume of the second cavity 232: the volume of the third cavity 233 is 1: X: 1, where 1≤X≤2. Since the volume of the first battery 11 is substantially the same as that of the second battery 12, the volume of the first cavity 231 used to absorb and dissipate heat for the first battery 11 is substantially the same as that of the third cavity 233 used to absorb and dissipate heat for the second battery 12, to enable the overall temperature of the first battery 11 to be substantially the same as that of the overall temperature of the second battery 12. The volume of the second cavity 232 is greater than the volume of the first cavity 231 or the volume of the third cavity 233, which facilitates the overall heat dissipation of the soaking partition 20. Further, if the ratio of the volume of the second cavity 232 to the volume of the first cavity 231 is greater than 2, the overall dimension design of the soaking partition 20b is too large, which is not conducive to the overall miniaturization design of the battery module 100. It should be understood that the ratio of the volume of the second cavity 232 to the volume of the first cavity 231 can be 1.1, 1.2, 1.3, 1.4, 1.5, 1.6, 1.7, 1.8, 1.9, and any value between any two ones the above values.

In further preferred embodiments, the ratio of the volume of the first cavity 231: the volume of the second cavity 232: the volume of the third cavity 233 is 1: 1.5: 1.

The first capillary element 241 is disposed at an inner wall of the first cavity 231 close to the first battery 11, the second capillary element 242 is disposed at an inner wall of the third cavity 233 close to the second battery 12, and the first cavity 231 and the third cavity 233 are configured as a sealed chamber. The heat generated by the first battery 11 is circulated and diffused through the cooling equalizing medium 61 inside the first cavity 231 of the soaking partition 20, so that the overall temperature difference of the first battery 11 is relatively small. The heat generated by the second battery 12 is circulated and diffused through the cooling medium 61 inside the third cavity 233 of the soaking partition 20, so that the overall temperature difference of the second battery 12 is relatively small.

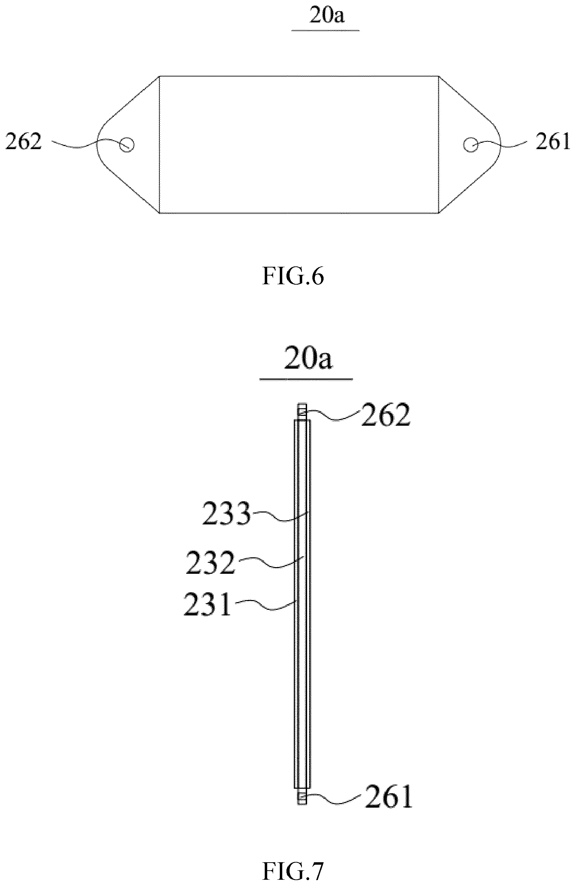

As shown in FIGS. 6 and 7, the soaking partition 20 includes a first inlet 261 through which the direct cooling medium 62 can flow into the second cavity 232 and a first outlet 262 through which the direct cooling medium 62 can flow out the second cavity 232, where the second cavity 232 is disposed between the first cavity 231 and the third cavity 233, so that the heat inside the first cavity 231 and the third cavity 233 can be rapidly transferred to the second cavity 232 and can be circulated by the flow of the direct cooling medium 62 inside the second cavity 232.

One of the first inlet 261 and the first outlet 262 of the soaking partition 20 is provided on a side wall of the first partition 251, and another one of the first inlet 261 and the first outlet 262 of the soaking partition 20 is provided on a side wall of the second partition 252.

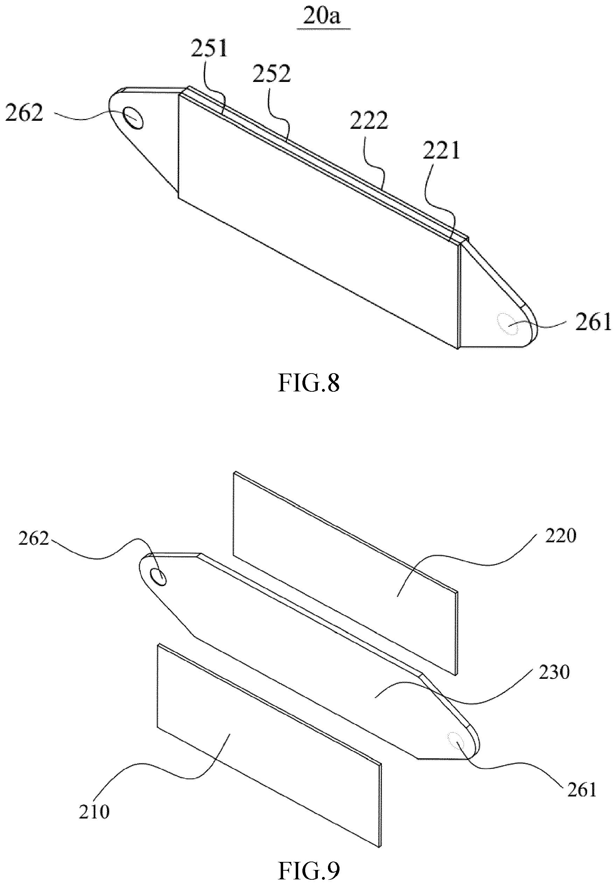

Further referring to FIGS. 8 to 9, the soaking partition 20 includes: a first soaking plate 210 provided with a hollow first cavity 231; a cooling plate 230 provided with a hollow second cavity 232; and a second soaking plate 220 provided with a hollow third cavity 233, where the cooling plate 230 is bonded to both the first soaking plate 210 and the second soaking plate 220. The first partition 251 is formed by a bonding wall where the first soaking plate 210 is welded to the cooling plate 230, and the second partition 252 is formed by a bonding wall where the cooling plate 230 is welded to the second soaking plate 220. As shown in FIG. 8, a first outlet 262 is provided at the top end of the first partition 251, and a first inlet 261 is provided at the bottom end of the second partition 252.

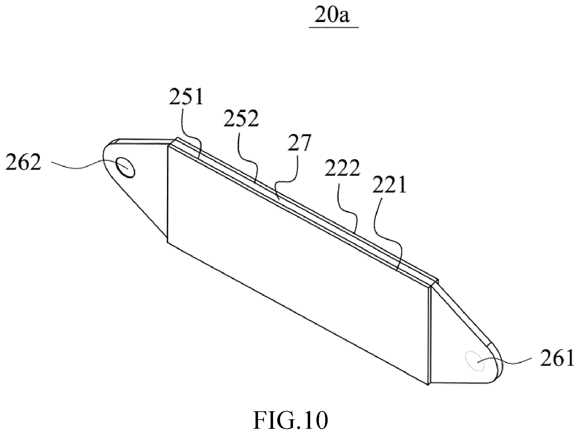

Further referring to FIGS. 10 to 11, the soaking partition plate 20 includes: a first soaking plate 210 provided with a hollow first cavity 231 and a second soaking plate 220 provided with a hollow third cavity 233, where the first soaking plate 210 is bonded to the second soaking plate 220 by a welding sealing plate 27, the first soaking plate 210 includes a first side wall 221 and a first partition 251 disposed opposite to the first side wall 221, the second soaking plate 220 includes a second partition 252 and a second side wall 222 disposed opposite to the second partition 252, and a second cavity 232 is formed by enclosing the first partition 251, the second partition 252, and a plurality of sealing plates 27 for connecting the first soaking plate 210 and the second soaking plate 220. As shown in FIG. 10, a first outlet 262 is provided at the top end of the first partition 251, and a first inlet 261 is provided at the bottom end of the second partition 252.

A liquid inlet tube 40 and a liquid outlet tube 50 are provided inside the battery module 100, where one branch of the liquid inlet tube 40 is connected to the first inlet 261 of the soaking partition 20, and one branch of the liquid outlet tube 50 is connected to the first outlet 262 of the soaking partition 20.

The second end 212 of the soaking partition 20 is connected to a direct cooling plate 30a provided at the bottom of the battery module 100. In some embodiments of the present disclosure, a direct cooling plate 30a is further provided, which facilitates rapid heat dissipation of the battery module 100.

Further referring to FIGS. 2 to 5, and FIGS. 12 to 13, the direct cooling plate 30a includes a base 32 on which a flow passage 34 is provided, where the flow passage 34 is configured as a plurality of grooves provided on the base 32, a second inlet 331 and a second outlet 332 are further provided on the base 32, and the direct cooling medium 62 can enter the flow passage 34 inside the direct cooling plate 30a through the second inlet 331, and the heat transferred from the soaking partition 20 to the direct cooling plate 30a is absorbed by the direct cooling medium 62, and the flow passage 34 inside the direct cooling plate 30a is extended as far as possible in a manner of repeatedly circuitous extension, so that the direct cooling medium 62 can sufficiently absorb the heat of the soaking partition 20 and be flowed out through the second outlet 332.

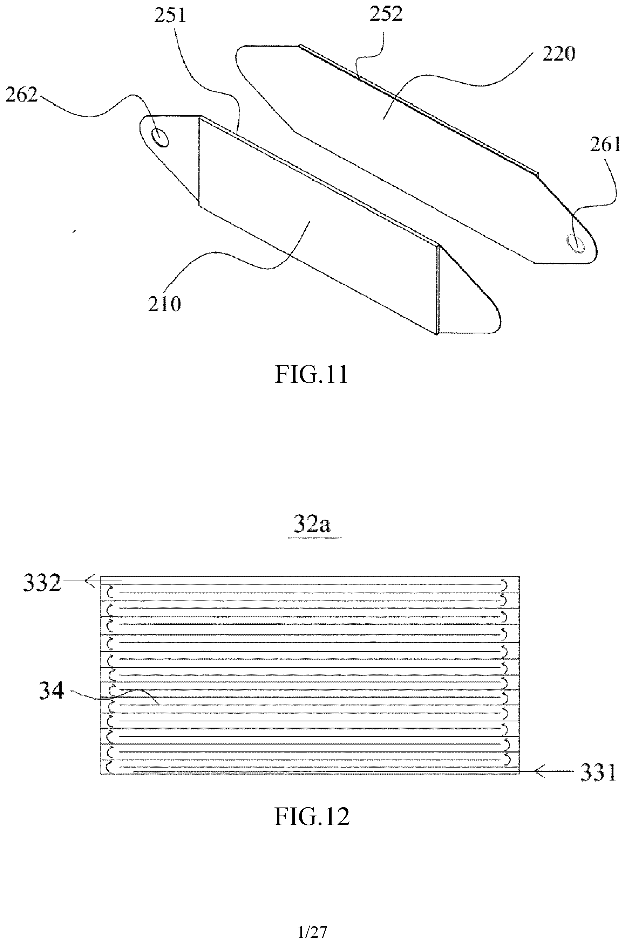

Referring to FIG. 12, in some embodiments provided in the present disclosure, the flow passage 34 on the direct cooling plate 30a may be provided in an S-shaped circuitous extension, a second inlet 331 of the flow passage 34 is provided at the bottom end of one side of the base 32, and a second outlet 332 of the flow passage 34 is provided at the top end of another side of the base 32.

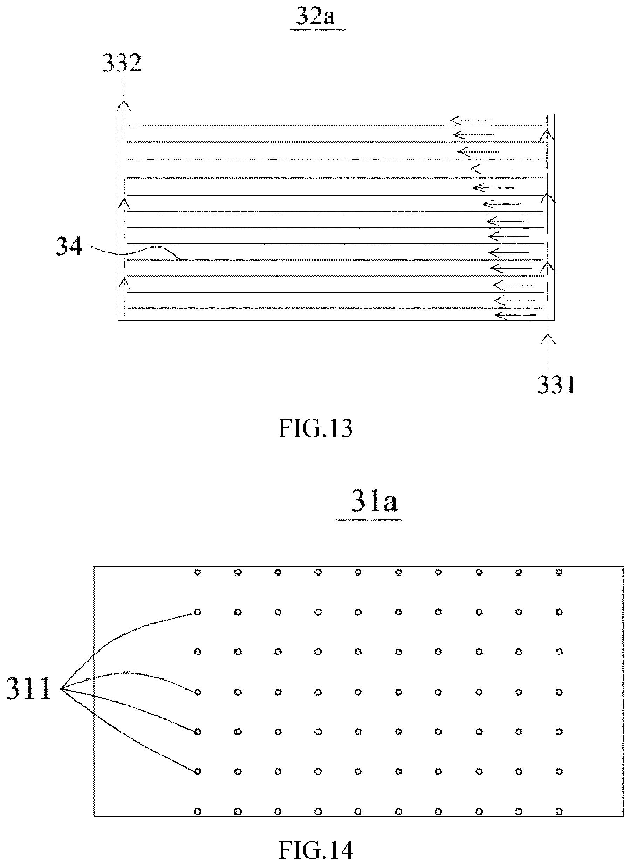

Further referring to FIG. 13, in yet another embodiment provided in the present disclosure, the flow passage 34 of the direct cooling plate 30a includes: two main flow passages extending in a direction parallel to the side of the direct cooling plate 30a; and a plurality of branch flow passages disposed perpendicular to the main flow passages and all connected to the two main flow passages, where a second inlet 331 is provided at one side of the bottom end surface of the base 32 and communicates with one of main flow passages, and a second outlet 332 is provided at another side of the top end surface of the base 32 and communicates with another one of main flow passages.

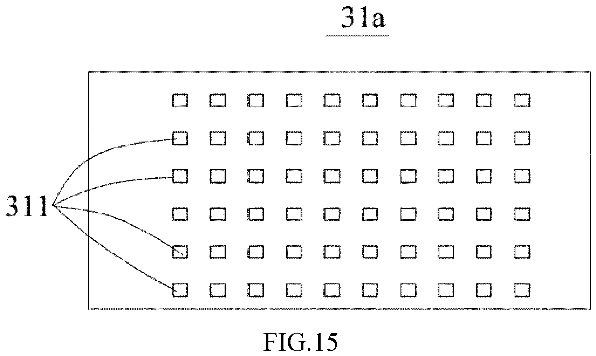

As shown in FIGS. 14 and 15, the direct cooling plate 30a further includes: a top cover 31a for covering the flow passage 34 on the base 32 so that the flow passage 34 communicates with the outside only through the second inlet 331 and the second outlet 332, where the top cover 31a includes opposite first and second side surfaces 312 and 313, the first side surface 312 is in contact with the soaking partition 20, and the second side surface 313 is right disposed against the flow passage 34 on the base 32. A plurality of protrusions 311 are further provided on the second side surface 313 of the top cover 31a for increasing a contact area between the direct cooling medium 62 and the second side surface 313. Since the heat conducted from the first battery 11 and the second battery 12 to the soaking partition 20 is mainly radiated through the top cover 31a of the direct cooling plate 30a, the plurality of protrusions 311 are provided on the top cover 31a. It is advantageous to improve the heat transfer efficiency of the top cover 31a and the direct cooling medium 62, thereby improving the heat absorption effect of the top cover 31a on the soaking partition 20.

It should be noted that the flow passage 34 inside the direct cooling plate 30a is formed by the base 32 and the top cover 31a, and the protrusions 311 are located in the flow passage 34, so that the contact area between the direct cooling medium 62 and the top cover 31a can be increased.

In one example provided in the present disclosure, a cross-section of each of the above-described protrusions 311 may be circular. As shown in FIG. 14, the plurality of protrusions 311 have approximately the same cross-sectional area, and adjacent ones of the protrusions 311 are disposed at approximately the same intervals, thereby facilitating uniform heat dissipation of the battery module 100.

In another example provided in the present disclosure, a cross section of each of the above-described protrusions 311 may be rectangular. As shown in FIG. 15, adjacent ones of the protrusions 311 are disposed at approximately the same intervals, thereby facilitating uniform heat dissipation of the battery module 100.

In some embodiments provided in the present disclosure, the inner cavity 23 of the soaking partition 20 is divided into three cavities, where the first cavity 231 close to the first battery 11 is provided with the cooling equalizing medium 61, the third cavity 233 close to the second battery 12 is provided with the cooling equalizing medium 61, the second cavity 232 between the first cavity 231 and the third cavity 233 is provided with the direct cooling medium 62, and the direct cooling medium 62 is provided inside the direct cooling plate 30a connected to the second end 212 of the soaking partition 20.

When the direct cooling medium 62 is configured as a liquid, the battery module 100 further includes a liquid inlet tube 40 and a liquid outlet tube 50, where one branch of the liquid inlet tube 40 is connected to the soaking partition 20, another branch of the liquid inlet tube 40 is connected to the direct cooling plate 30a, one branch of the liquid outlet tube 50 is connected to the soaking partition 20, another branch of the liquid outlet tube 50 is connected to the direct cooling plate 30a, the second inlet 331 of the flow passage 34 of the direct cooling plate 30a is in communication with the first inlet 261 of the second cavity 232 of the soaking partition 20, and the second outlet 332 of the flow passage 34 of the direct cooling plate 30a is in communication with the first outlet 262 of the second cavity 232 of the soaking partition 20. When the direct cooling medium 62 is injected into the direct cooling plate 30a, a portion of the direct cooling medium 62 is flowed into the second cavity 232 of the soaking partition 20 through the liquid inlet tube 40, a portion of the direct cooling medium 62 is flowed into the flow passage 34 of the direct cooling plate 30a through the liquid inlet tube 40, the direct cooling medium 62 is flowed into both the inside of the second cavity 232 of the soaking partition 20 and the flow passage 34 of the direct cooling plate 30a, and one end of the soaking partition 20 is connected to the direct cooling plate 30a to transfer heat absorbed by the soaking partition 20 from the first battery 11 and the second battery 12 to the direct cooling plate 30a, thereby effectively improving the heat dissipation efficiency of the battery module 100.

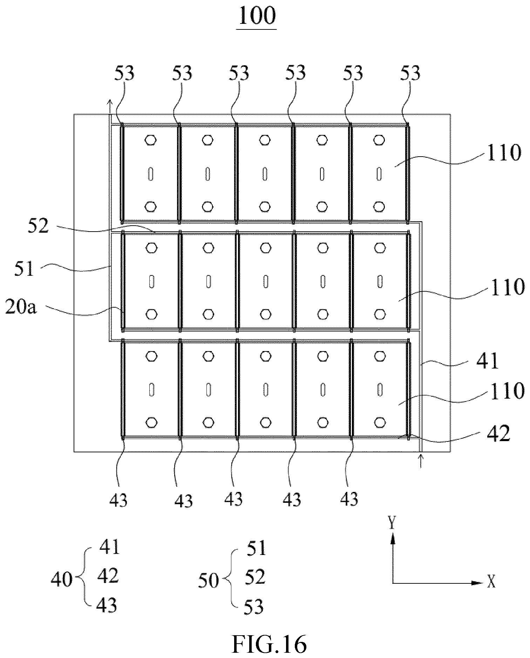

Referring to FIG. 16, in one example provided in the present disclosure, when the battery module 100 is configured as a single-layer battery module 100, one soaking partition 20 is used to separate a first battery 11 and a second battery 12 in each group of batteries 110, and a group of soaking partitions 20 are provided in each group of batteries. The number of the soaking partitions 20 provided inside the battery module 100 is substantially the same as the number of batteries 10 in the battery module 100, a liquid inlet tube 40 is provided at one side of the battery module 100, a liquid outlet tube 50 is provided at another side of the battery module 100. The liquid inlet tube 40 includes a main liquid inlet tube 41 and a plurality of branch liquid inlet tubes 42, where each of the liquid inlet tubes 42 is provided with a plurality of interfaces 43, and each of the interfaces 43 is connected to the first inlet 261 of the second cavity 232 of corresponding one of the soaking partitions 20. The number of the branch liquid tubes 42 is the same as the number of the groups of the soaking partitions 20, and the number of the interfaces 43 of the branch liquid tubes 42 is the same as the number of the soaking partitions 20 in each group of soaking partitions 20. The outlet tube 50 includes a main outlet tube 51 and a plurality of branch outlet tubes 52, where each of the branch outlet tubes 52 is provided with a plurality of joints 53, each of the plurality of joints 53 is connected to the first outlet 262 of the second cavity 232 of corresponding one of the soaking partitions 20, the number of the outlet tubes 52 is the same as the number of groups of soaking partitions 20, and the number of the interfaces 43 of the branch outlet tubes 52 is the same as the number of the soaking partitions 20 in each group of soaking partitions 20.

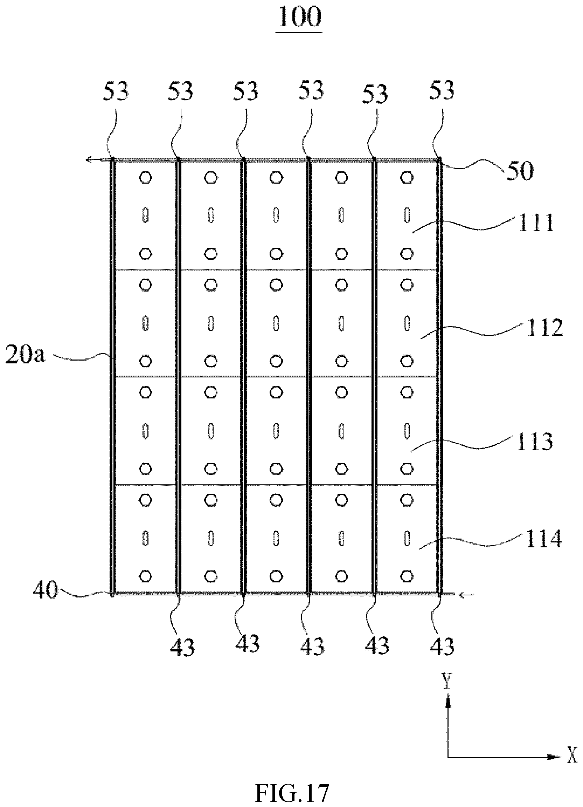

Further referring to FIG. 17, when the battery module 100 is configured as a multi-layer battery module 100, one soaking partition 20 may be used to simultaneously separate a plurality of groups of first batteries 11 and second batteries 12. When the battery module 100 includes four groups of batteries, each group of batteries 110 includes five batteries, five soaking partitions 20 are provided in the battery module 100, and each of the soaking partitions 20 is used to simultaneously separate the first batteries 11 and the second batteries 12 in the first group of batteries 111, the first batteries 11 and the second batteries 12 in the second group of batteries 112, the first batteries 11 and the second batteries 12 in the third group of batteries 113, and the first batteries 11 and the second batteries 12 in the fourth group of batteries 114. A liquid inlet tube 40 is provided at one side of the battery module 100, and a liquid outlet tube 50 is provided at another side of the battery module 100. The liquid inlet tube 40 includes a plurality of interfaces 43, where each of the interfaces is connected to the first inlet 261 of the second cavity 232 of corresponding one of the soaking partitions 20, and the number of the interfaces 43 of the liquid inlet tube 40 is the same as the number of the soaking partitions 20. The liquid outlet tube 50 is provided with a plurality of joint 53, where each of the joints is connected to the first outlet 262 of the second cavity 232 of corresponding one of the soaking partitions 20, and the number of the joints 53 of the liquid outlet tube 50 is the same as the number of the soaking partitions 20.

In addition, in the multilayer battery module, one soaking partition 20 may be provided between each of the first batteries 11 and corresponding one of the second batteries 12 adjacent to the first battery 11 in each group of batteries 110.

In some embodiments of the present disclosure, there is also provided a battery pack, including a plurality of battery modules described above 100, where the plurality of battery modules 100 may be provided in a parallel connection manner or in series connection manner, or may be provided in a hybrid connection manner.

### A second embodiment

Some embodiments of the present disclosure provide a battery module 100, which may be a cylindrical battery module or a square battery module, and which includes a plurality of batteries arranged in a matrix.

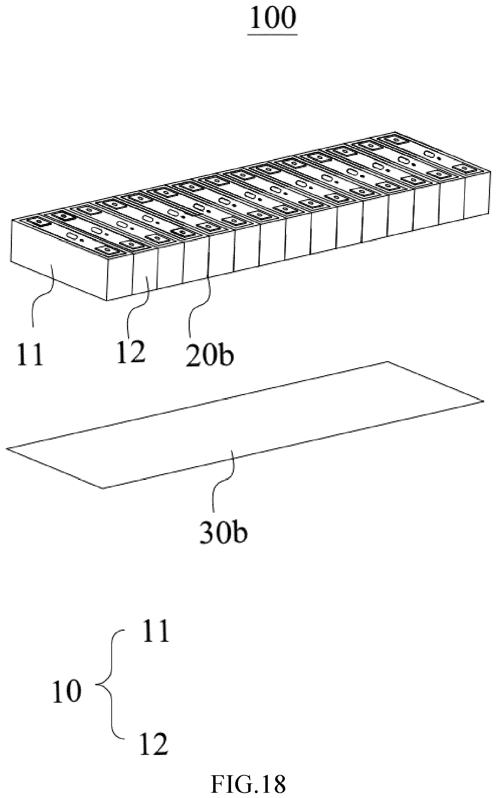

Referring to FIG. 18, the battery module 100 includes a first direction and a second direction perpendicular to the first direction, where a plurality of batteries 10 are arranged side by side in the first direction to form a group of batteries, and a plurality of groups of batteries 10 are arranged side by side in the second direction to form a layer of battery module 100. In an alternative example, the battery module 100 may include a single-layer battery module, a double-layer battery module, or a multi-layer battery module.

The battery module 100 includes a case body and a case cover, where a plurality of batteries 10 are arranged in a matrix inside the case body, and the case cover is used to cover an opening end of the case body.

In the field of battery technologies, battery capacity and charging-discharging ratio are key factors affecting the performance of an energy storage battery. Increasing of the battery capacity and the charging-discharging ratio is a hot spot in the current market. As the capacity of the battery is greatly increased, calorification and difficulty of the passive heat dissipation of the battery become higher and higher.

In the related art, a heat conduction partition is sandwiched between individual batteries of the battery module 100, a liquid cooling plate is provided at the bottom of the battery module 100, and heat emitted from each of the batteries is transferred to the liquid cooling plate by the heat conduction partition and taken away by the liquid cooling plate. The liquid cooling plate includes: a flow passage plate provided with a fluid passage for flowing a cooling medium; and a top cover for absorbing heat generated by the heat conduction partition. A serious calorification problem still exists in the battery module 100 using the above-mentioned liquid cooling plate, and even a serious thermal runaway phenomenon of the battery module 100 may occur.

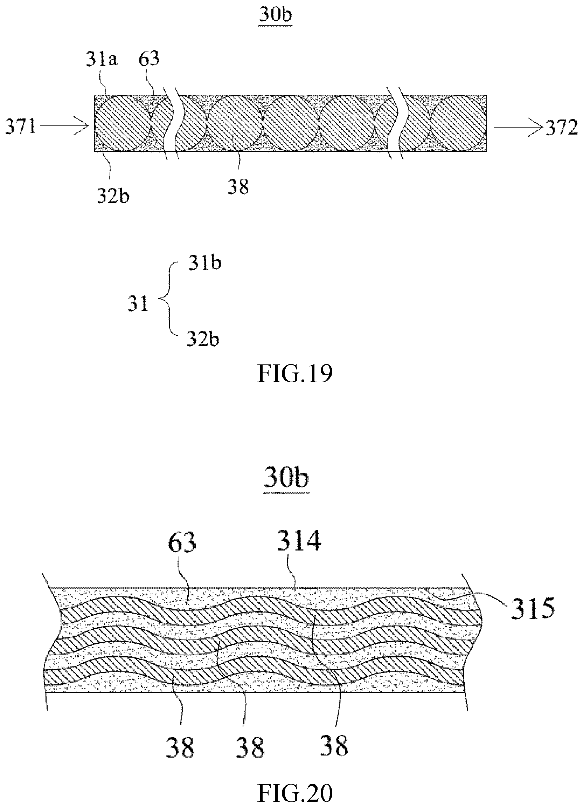

Referring to FIGS. 19 to 23, in some embodiments of the present disclosure, there is provided a direct cooling plate 30b, including: a second housing 31 provided with a hollow accommodating cavity 35; a passage tube 36 disposed in the accommodating cavity 35 of the second housing 31, where an inner cavity of the passage tube 36 defines a fluid passage 38 for flowing a direct cooling medium; and a heat conduction medium 63 for filling a gap between the passage tube 36 and the second housing 31.

In addition to the passage tube 36 for flowing the direct cooling medium, the inside cavity of the direct cooling plate 30b is further provided with the heat conduction medium 63 in the gap between the passage tube 36 and the second housing 31 of the direct cooling plate 30b. After the heat generated by the battery is transmitted to the second housing 31 of the direct cooling plate 30b through the soaking partition 20, the heat conduction medium 63 can quickly absorb the heat of the second housing 31 and then transfer the heat to the passage tube 36. By providing the heat conduction medium 63 inside the direct cooling plate 30b, the heat absorbing performance of the direct cooling plate 30b can be effectively improved, thereby effectively alleviating a problem of serious calorification of the battery.

Further, if the heat conduction medium 63 described above is not provided in the gap between the second housing 31 and the passage tube 36, the gap between the second housing 31 and the passage tube 36 is filled with air, and the heat conduction coefficient of the air is 0.026 W/(m·K). Since the heat conduction coefficient of the air is low, the heat absorbed by the second housing 31 of the direct cooling plate 30b from the partition 30 cannot be rapidly transferred to the passage tube 36, thereby significantly reducing the heat dissipation efficiency of the direct cooling plate 30b.

In some embodiments of the present disclosure, the heat conduction medium 63 may be a paste-like liquid, which has good wettability and can effectively fill the gap between the second housing 31 and the passage tube 36. The heat conduction medium 63 may also be a solid heat conduction gasket, which has good flexibility and elastic characteristics and thus can be used to substantially cover a rough surface on the second housing 31 or the passage tube 36; The heat conduction medium 63 may also be a heat conduction gel applied to or filled into the surface of the second housing 31 and the passage tube 36 to form a uniform heat conduction layer. The heat conduction gel has an effect of filling a concave-convex structure of the surface of the second housing 31 or the passage tube 36, thereby achieving a uniform heat conduction effect.

Further, the heat conduction medium 63 is formed by mixing a base material with a heat conduction padding, and the heat conduction medium 63 has different heat conduction coefficients depending on the mixing ratio of the base material and the heat conduction padding. In a preferred embodiment, the heat conduction coefficient of the heat conduction medium 63 used in the present disclosure is 1 W/(m·K) to 10 W/(m·K).

In some embodiments of the present disclosure, the base material forming the heat conduction medium 63 includes silica gel or a resin, the heat conduction padding forming the heat conduction medium 63 includes a metal powder or a ceramic powder, and the metal suitable for forming the metal powder is preferably copper or aluminum.

Further, the heat conduction medium 63 is configured to be disposed around the outer surface of the passage tube 36, and the uniform heat conduction medium layer is formed on the outer surface of the passage tube 36 by coating or winding. The passage tube 36 is wrapped by the heat conduction medium 63, so that heat is uniformly distributed on an outer periphery of the passage tube 36, thereby maintaining uniformity of the heat dissipation effect of the passage tube 36 and improving uniformity of the heat dissipation performance of the battery module 100.

Further, the second housing 31 of the direct cooling plate 30b includes opposite first and second side plates 31b and 32b, the accommodating cavity 35 is located between the first side plate 31b and the second side plate 32b, the passage tube 36 is disposed in the accommodating cavity 35, and the first side plate 31b is used to cover the opening end of the second side plate 32b.

Further, the first side plate 31b includes opposite first and second surfaces 314 and 315, where the first surface 314 is connected to the partition 20 and the second surface 315 is disposed adjacent to the heat conduction medium 63. The heat generated by the first battery 11 and the second battery 12 is transferred to the first surface 314 of the first side plate 31b through the partition 20, and further transferred to the heat conduction medium 63 through the second surface 315 of the first side plate 31b. Since the heat conduction medium 63 has excellent heat absorption performance, the heat generated by the battery can be rapidly absorbed by the direct cooling plate 30b.

Further, referring to FIGS. 19 to 21, a portion of the first surface 315 of the first side plate 31b is in contact with the heat conduction medium 63, and/or another portion of the first surface 315 of the first side plate 31b is in contact with an outer wall of the passage tube 36. The portion of the surface of the first side plate 31b in contact with the passage tube 36 may directly transfer heat absorbed by the first side plate 31b to the passage tube 36, and the portion of the surface of the first side plate 31b in contact with the heat conduction medium may transfer heat absorbed by the first side plate 31b to the heat conduction medium.

The direct cooling plate 30b further includes a first inlet 371 and a first outlet 372, where the direct cooling medium enters the inside of the fluid passage 38 and performs sufficient heat exchange inside the direct cooling plate 30b, so as to sufficiently absorb the heat of the battery and flow out into the outside of the direct cooling plate 30b through the first outlet 372.

Further, the total volume of the fluid passage 38 inside the passage tube 36 is greater than the total volume for receiving the heat-absorbing medium defined by the gap between the passage tube 36 and the second housing 31, so that most of the volume of the inner cavity of the direct cooling plate 30b is used for flowing the direct cooling medium.

As shown in FIG. 19, in one example provided in the present disclosure, the passage tube 36 includes a fluid passage 38, the cross section of the passage tube 36 includes a plurality of discs, adjacent ones of the discs are connected to each other, the top wall 213 of the passage tube 36 is in contact with the first surface 315 of the first side plate 31b, and the gap between the adjacent discs is filled with the heat conduction medium 63.

As shown in FIG. 20, in yet another example provided in the present disclosure, the passage tube 36 includes one or more fluid passages 38 and is extended generally in an S-shaped spiral, so that the fluid passages 38 inside the passage tube 36 are extended generally in an S-shaped spiral, thereby facilitating sufficient contact between the direct cooling medium inside the fluid passages 38 and the inner wall of the passage tube 36 and further enhancing the heat dissipation effect of the passage tube 36.

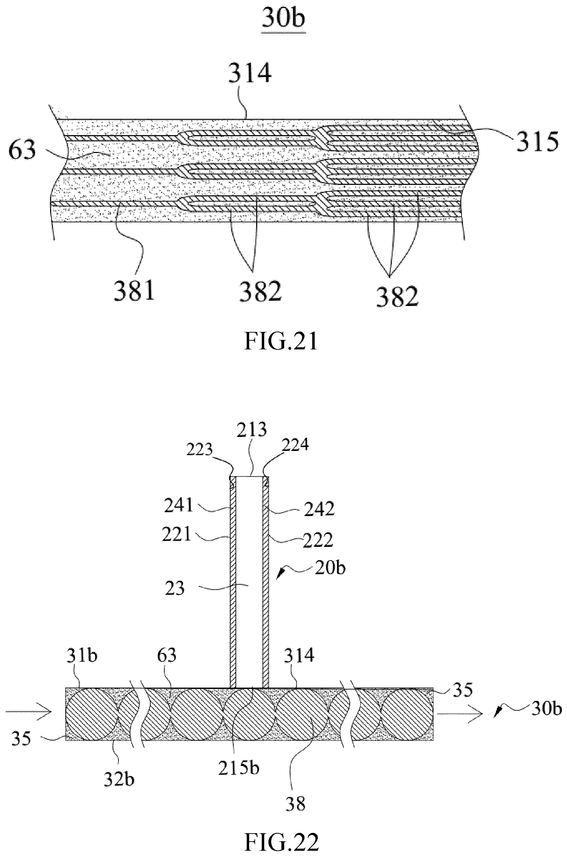

As shown in FIG. 21, in another example provided in the disclosure, the passage tube 36 includes a plurality of fluid passages 38 disposed in a dendritic distribution and including a first flow passage 381 and a second flow passage 382 in communication with the first flow passage 381, where the first flow passage 381 extends in substantially the same direction as the flow direction of the direct cooling medium, the second flow passage 382 is configured as a plurality of branch flow passages branched from the end of the first flow passage 381, the inlet and outlet of each of the branch flow channels are provided with corners, the body portion of each of the branch flow channels extends in the same direction as the flow direction of the direct cooling medium, and the second flow channel 382 may contain two or three or four branch flow passages. The direct cooling medium enters the first flow passage 381 through the first inlet 371 and enters the plurality of second flow passages 382 through the first flow passage 381, and the fluid passage 38 in the dendritic distribution can effectively improve the uniformity of the heat exchange effect of the direct cooling medium. It should be understood that the temperature of the direct cooling medium entering the first flow passage 381 is less than the temperature of the direct cooling medium of the second flow passage 382, thereby effectively increasing the heat transfer effect of the second flow passage 382 by increasing the heat transfer area of the second flow passage 382.

When the passage tube 36 includes a plurality of flow passages or a plurality of branch flow passages, the heat conduction medium 63 is further used to fill a gap between adjacent flow passages and a gap between adjacent branch flow passages, so that the passage tube 36 in which each of flow passages inside the direct cooling plate 30b is located is surrounded by the heat conduction medium 63, thereby improving the uniformity of the heat conduction performance and the heat dissipation performance of the direct cooling plate 30b.

The first side plate 31b and the second side plate 32b are made of metal materials having excellent heat conduction, and the metal materials suitable for making the first side plate 31b and the second side plate 32b include an aluminum alloy material, where the aluminum alloy material has a heat conduction coefficient of 200W/(m·K) to 350W/(m·K) and the heat conduction medium 63 has a heat conduction coefficient of 1W/(m·K) to 10W/(m·K). In one example provided in the present disclosure, the first side plate 31b and the second side plate 32b are made of the same aluminum alloy material, and the aluminum alloy material for making the first side plate 31b and the second side plate 32b has a heat conduction coefficient of 330W/(m·K) and the heat conduction medium 63 has a heat conduction coefficient of 2W/(m·K).

It should be understood that heat conduction coefficient of the the aluminum alloy material for making the first side plate 31b and the second side plate 32b may also be 210W/(m·K), 220W/(m·K), 230W/(m·K), 240W/(m·K), 250W/(m·K), 260W/(m·K), 270W/(m·K), 280W/(m·K), 290W/(m·K), 300W/(m·K), 310W/(m·K), 320W/(m·K), 340W/(m·K), or a value between any two ones of the above values.

The heat conduction coefficient of the heat conduction medium 63 may also be a 3W/(m·K), 4W/(m·K), 5W/(m·K), 6W/(m·K), 7W/(m·K), 8W/(m·K), 9W/(m·K), or a value between any two ones of the above values.

Further referring to FIG. 18, the battery module 100 includes a plurality of groups of batteries arranged side-by-side, where each group of the plurality of groups of batteries includes a plurality of batteries arranged side-by-side. Further, each group of batteries includes a plurality of first batteries 11 and a plurality of second batteries 12, where each of the first batteries 11 is adjacent to corresponding one of the second batteries 12, and a soaking partition is arranged between each of the first batteries 11 and corresponding one of the second batteries 12 adjacent to the first battery 11 and an end of the soaking partition 20 is connected to the direct cooling plate 30b.

The soaking partition may be a solid plate-like body and include opposite first and second sides, where the first side is in contact with the first battery 11, the second side is in contact with the second battery 12, and heat generated by the first battery 11 and the second battery 12 is rapidly transferred to the direct cooling plate 30b.

In some embodiments of the present disclosure, there is also provided a soaking partition 20b not only capable of absorbing and conducting not only heat generated by the first battery 11 and the second battery 12 but also capable of helping to improve the problem of the large temperature difference between different areas of the first battery 11 and different areas of the second battery 12 with respect to a conventional heat conduction partition.

Specifically, the soaking partition 20b includes: a plate body provided with a hollow inner cavity 23, where at least a portion of the inner cavity 23 of the plate body is configured as a closed cavity, and a wall surrounding the closed cavity includes a first side wall 221 in contact with the first battery 11 and a second side wall 312 in contact with the second battery 12; a cooling equalizing medium placed in the closed cavity; and a capillary element 24b bonded to at least a portion of the inner wall of the cavity, where an end of the capillary element 24b is in contact with the cooling equalizing medium.

The cooling medium is disposed in the closed cavity, the heat generated by the first battery 11 is transferred to the cooling equalizing medium inside the soaking partition 20b through a wall where the first side wall 221 is located, the heat generated by the second battery 12 is transferred to the cooling equalizing medium inside the soaking partition 20b through a wall where the second side wall 312 is located, the cooling equalizing medium at the high-temperature heat source of the first battery 11 or the second battery 12 is vaporized after absorbing the heat generated by the first battery 11 or the second battery 12, so as to circularly diffuse the vaporized cooling equalizing medium in the inner cavity 23 of the soaking partition. The vaporized cooling equalizing medium is in contact with the direct cooling plate 30b, so that the heat of the vaporized cooling equalizing medium is absorbed by the direct cooling plate 30b, so as to enable the cooling equalizing medium to be cooled and formed as a condensed cooling equalizing medium. The condensed cooling equalizing medium is diffused on the inner wall of the plate body through the capillary element 24b and reaches the high-temperature heat source. Vapor-liquid circulation is performed for the cooling equalizing medium in the closed cavity of the soaking partition 20b, and the capillary element 24b facilitates rapid diffusion of the condensed cooling equalizing medium on the inner wall of the plate body. The heat generated by the local high temperature of the battery is absorbed by the cooling equalizing medium and then diffused and further absorbed by the condensed cooling equalizing medium, so that the soaking partition 20b is configured in a plate-like structure in which the temperature difference is relatively small, where the first battery 11 is heat-exchanged with the first side wall 221 of the soaking partition 20b, and the second battery 12 is heat-exchanged with the second side wall 312 of the soaking partition 20b, thereby reducing the temperature difference of the battery.

In the present disclosure, the cooling medium includes a direct cooling medium and a cooling equalizing medium, where the direct cooling medium is defined to be flowed into an inlet of a flow passage and flowed out from an outlet of the flow passage, and the cooling equalizing medium is defined to added into the sealed cavity and configured to flow only inside the cavity. The cooling equalizing medium includes water or a refrigerant, which may be Freon or ammonia, or the like. The cooling equalizing medium has a liquid phase and a vapor phase. The liquid cooling equalizing medium is converted into a vapor cooling equalizing medium after heat absorption, and the vapor cooling equalizing medium is rapidly diffused in its accommodating space so that the temperature difference of the accommodating space in which the cooling equalizing medium is located is relatively small. The direct cooling medium includes water or air, and the direct cooling medium carries away the heat by means of flowability of the direct cooling medium 62 after heat absorption, thereby dissipating heat from the battery module 100.

Further referring to FIG. 22, the plate body of the soaking partition 20b includes: a top wall 213; and an opening end 215b disposed opposite to the top wall 213, where top wall 213 is connected to top portions of the first side wall 221 and the second side wall 312, the opening end 215b is connected to the direct cooling plate 30b and covered by the direct cooling plate 30b, and the soaking partition 20b is connected to the direct cooling plate 30b, preferably welded to the direct cooling plate 30b.

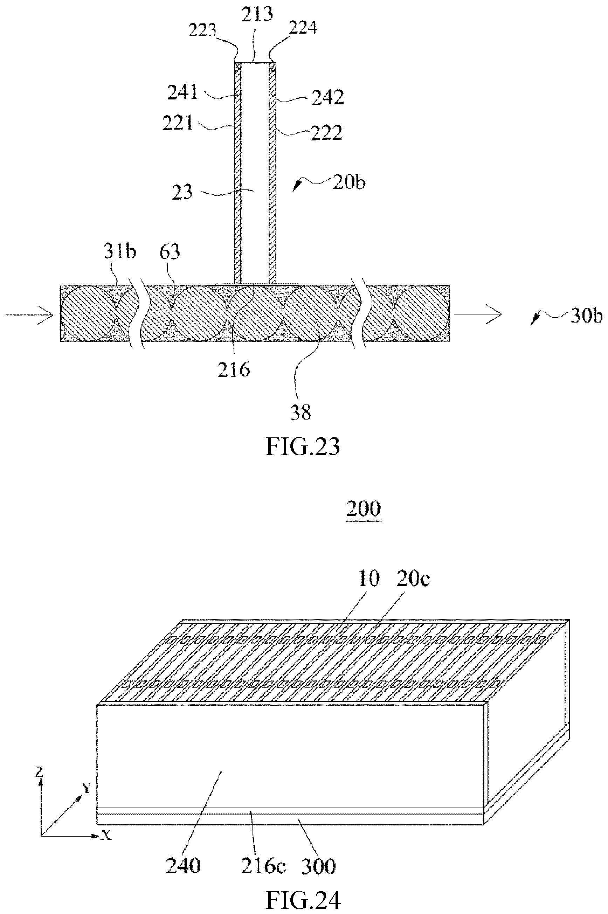

Further referring to FIG. 23, the plate body of the soaking partition 20b: includes a top wall 213 and a bottom wall 216 disposed opposite to the top wall 213, where the top wall 213 is connected the top portions of the first side wall 221 and the second side wall 312, the bottom wall 216 is connected to bottom portions of the first side wall 221 and the second side wall 312, the bottom wall 216 is connected to the direct cooling plate 30b, and the bottom wall 216 is connected to the direct cooling plate 30b in any one of welding, clamping, or bonding.

In a further preferred embodiment, an area of an orthographic projection of the top wall 213 of the soaking partition 20b on the direct cooling plate 30b is less than the area of the orthographic projection of the bottom wall 216 on the direct cooling plate 30b. By increasing the contact area between the bottom wall 216 and the direct cooling plate 30b, the heat exchange efficiency between the soaking partition 20b and the direct cooling plate 30b is improved.

The material for making the soaking partition 20b may be made of a metal material that facilitates heat conduction. Suitable metal materials include copper, aluminum, titanium, stainless steel, and the like. The soaking partition 20b may also be made of a composite metal material. Suitable composite metal materials include a copper-aluminum composite material or a copper-nickel composite material.

The capillary element 24b may be made of a fibrous cotton material, where the fibrous cotton material is bonded to the inner surface of the soaking partition 20b, and the inner portion of the fibrous cotton material has a rich network structure, thereby facilitating rapid flow of the liquid cooling medium inside the fibrous cotton.

The capillary element 24b may also be formed by mixing a metal powder with a solution to form a metal powder slurry, where the metal powder slurry is bonded to the inner wall of the soaking separator 20b by a spraying process. A suitable metal powder includes a copper powder, which has good hydrophilicity. The capillary structure formed by the copper powder is not only strong in capillary force but also good in heat conduction, so that the heat dissipation effect of the soaking partition 20b can be effectively improved.

Further, the first side wall 221 of the plate body includes a first inner surface 223, the second side wall 312 of the plate body includes a second inner surface 224, and the inner cavity 23 of the soaking partition 20b is provided with a first capillary element 241 and a second capillary element 242, where the first capillary element 241 is bonded to the first inner surface 223, the second capillary element 242 is bonded to the second inner surface 224, the liquid cooling medium can be rapidly diffused on the first inner surface 223 through the first capillary element 241, and the liquid cooling medium can be rapidly diffused on the second inner surface 224 through the second capillary element 242.

The direct cooling plate 10 provided by the embodiments of the present disclosure may also be integrated on the bottom plate of a single battery for performing heat dissipation for the single battery.

Some embodiments of the present disclosure further provide a battery pack: including a plurality of battery modules, which may be provided in series connection manner, or in a parallel connection manner, or in a hybrid connection manner, so as to meet a dosage requirement of the battery pack used in an electrical device or in an electric tool.

### A third embodiment

As shown in FIGS. 24, some embodiments of the present disclosure provide a battery module, including a group of battery cells; and a soaking plate assembly.

The group of battery cells include a plurality of batteries 10 arranged in a first direction (an X direction shown in Figures). The battery 10 has opposite first and second surfaces, and opposite first and second side surfaces and opposite top and bottom surfaces between the first and second surfaces. The surface area of each of the first surface and the second surface is greater than the surface area of the first side surface, the surface area of the second side surface, the surface area of the top surface, and the surface area of the bottom surface, that is, the first surface and the second surface are corresponding ones of surfaces of the battery 10 having larger areas.

The first direction (i.e., the X direction in the figure) may be a thickness direction of the battery 10. The battery cell further includes a second direction (i.e., the Y direction in the figure) and a third direction (i.e., the Z direction in the figure), where the second direction is a direction from the first side surface to the second side surface, and the third direction is a direction from the bottom surface to the top surface. The second direction and the third direction are both perpendicular to the first direction, and the third direction is perpendicular to the second direction.

The soaking partition assembly includes a soaking partition 20c and a soaking bottom plate 216c. The soaking partition 20c is disposed between adjacent ones of batteries 10. It should be noted that at least one soaking partition 20c may be disposed between two adjacent batteries 10, and one soaking partition 20c may be disposed at the outside of the battery 10 located at both ends of each group of batteries away from an intermediate battery 10 therein.

In the present disclosure, the soaking partition 20c may be disposed on the first surface and the second surface of the battery 10 to enable the soaking partition 20c to be bonded to a surface of the battery 10 having a larger area. The heat transfer rate of the battery 10 is increased by increasing the contact area between the battery 10 and the soaking partition 20c, and the heat dissipation path between the batteries 10 can be shortened, thereby ensuring temperature uniformity between the batteries 10.

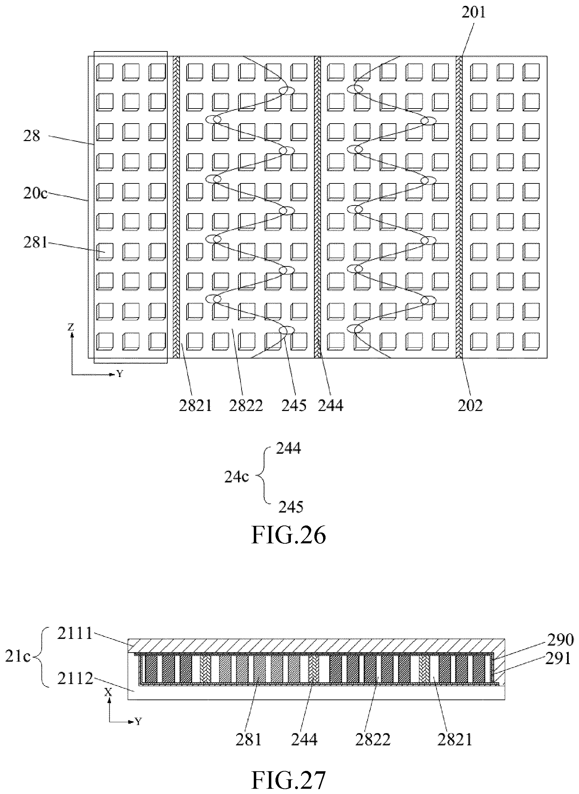

As shown in FIGS. 26 and 27, the soaking partition 20c includes a first housing 21c inside which a capillary element 24b including a primary capillary structure 244 and a secondary capillary structure 245 is provided, and a working medium is further provided inside the first housing 21c. The first housing 21c has a first cavity inside which the primary capillary structure 244 and the secondary capillary structure 245 are spaced apart, and the cross-sectional area of the primary capillary structure 244 is greater than the cross-sectional area of the secondary capillary structure 245, where the cross-sectional area may be a cross-sectional area of the capillary structure intercepted by an XY plane. The working medium is disposed in the first cavity and is heat-transferred by change of phase states. For example, a liquid working medium is formed as a vapor working medium after heat absorption, and heat is converted during the change of phase states. The primary capillary structure 244 and the secondary capillary structure 245 are both used to adsorb the working medium, which is contained within the first cavity.

The material of the first housing 21c may be a metal such as a copper alloy, an aluminum alloy, or a magnesium alloy, and the material of the first housing 21c may be another material having good heat conduction, which is not limited herein. The material of the primary capillary structure 244 and the secondary capillary structure 245 may be a capillary fiber material, which is not limited herein. The working medium may be water, ethanol, acetone, or the like, which is not limited herein.

The soaking partition 20c has opposite top and bottom portions 201 and 202 in the third direction, and both the primary capillary structure 244 and the secondary capillary structure 245 are extended from the bottom portion 202 to the top portion 201. When the soaking partition 20c is operated, the liquid working medium is sucked from one end of the primary capillary structure 244 and the secondary capillary structure 245 at the bottom portion 202 and diffused from the bottom portion 202 to the top portion 201. The liquid working medium absorbs heat from the battery 10 during the diffusion process of the liquid working medium to form and diffuse a vapor working medium into the first cavity. When the vapor working medium is circulated to the bottom portion 202 of the soaking partition 20c, the vapor working medium is cooled as the liquid working medium again, and the liquid working medium is sucked, diffused, heat-exchanged, and vaporized again from the bottom portion 202 of the primary capillary structure 244 and the secondary capillary structure 245. With such circulation, the heat-exchange function of the soaking partition 20c is realized, thereby absorbing heat from the battery 10 and maintaining temperature balance of the battery 10.

Conventional soaking partition generally includes only a primary capillary structure, and there are large voids in the primary capillary structure, and the heat conduction rate is relatively slow between the voids, resulting in non-uniform heat transfer. The soaking partition 20c of the present disclosure includes the primary capillary structure 244 and the secondary capillary structure 245 spaced apart, and the secondary capillary structure 245 is used to absorb a working medium between adjacent primary capillary structures 244. Compared with the conventional soaking partition, the soaking partition 20c of the present disclosure is internally provided with the primary capillary structure 244 and the secondary capillary structure 245, so that the coverage area of the internal capillary structure of the soaking partition 20c is increased, and the heat conduction rate and the heat transfer uniformity of the working medium in the soaking partition 20c can be improved, thereby improving the heat exchange efficiency of the soaking partition 20c.

In some embodiments, as shown in FIG. 26, the primary capillary structure 244 may be extended linearly from the bottom portion 202 to the top portion 201. For example, the primary capillary structure 244 may be a linear structure extending in the third direction. The secondary capillary structure 245 may be extended in a curve from the bottom portion 202 to the top portion 201. For example, the secondary capillary structure 245 may be a serpentine structure extending in the third direction. The secondary capillary structure 245 may be positioned between adjacent primary capillary structures 244 and disposed in a curvilinear configuration, so that the coverage area of the secondary capillary structure 245 can be increased, thereby further improving the absorption rate and the heat conduction rate of the working medium inside the soaking partition 20c and effectively improving the heat transfer rate and the heat transfer uniformity of the soaking partition 20c.

In some embodiments, as shown in FIG. 26, the soaking partition assembly further includes a plurality of groups of support assemblies 28 spaced apart within the first housing 21c. For example, a plurality of groups of support assemblies 28 may be spaced apart in the second direction. Each group of support assemblies 28 includes a plurality of support blocks 281 arranged in an array. For example, each group of support assemblies 28 may include a plurality of columns of support blocks arranged in the second direction and a plurality of rows of support blocks arranged in the third direction. As shown in FIG. 26, the support block 281 has two opposite ends in the first direction, and the two opposite ends of the support block 281 respectively abut against the inner wall of the first housing. The support block 281 is positioned within the first cavity and supported between the first surface and the second surface to support the first cavity to avoid deformation of the first housing. The cross-sectional shape of the support block 281 may be a square, a circular shape, a triangular shape, or the like, which is not limited herein.

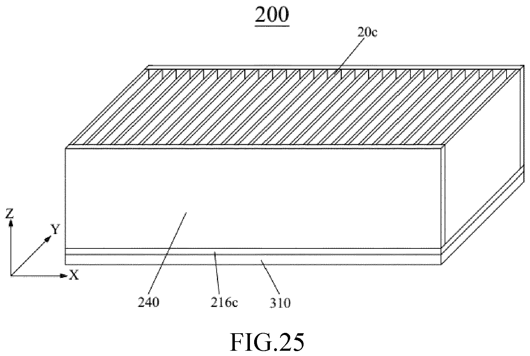

In some embodiments, as shown in FIGS. 25 and 26, a first gap 2821 is provided between two adj acent groups of support assemblies 28. Within each group of support assemblies 28, a second gap 217 is provided between adjacent ones of the support blocks 281. The cross-sectional area of the first gap 2821 is greater than the cross-sectional area of the second gap 217. The primary capillary structure 244 is disposed within the first gap 2821, and the secondary capillary structure 245 is disposed within the second gap 217. The first gap 2821 may be a linear gap extending in the third direction, and the primary capillary structure 244 is linear and accommodated in the first gap 2821. The second gap 217 may be a longitudinal gap extending in the third direction between two adjacent columns of support blocks 281 or a transverse gap extending in the second direction between two adjacent rows of support blocks 281, and the secondary capillary structure 245 is inserted into the second gap 217 between the support blocks 281 in a curved fashion.

It should be noted that the support blocks 281 in the support assembly 28 may also be arranged aperiodically, that is, irregularly, and the first gap 2821 and the second gap 217 may also be non-linear gaps, which may be specifically designed according to actual process requirements and is not specifically limited herein.

In some embodiments, as shown in FIG. 27, the first housing 21c includes a first cover plate 2111 and a second cover plate 2112, which abut to form the first housing having a cavity. Cross sections of the first cover plate 2111 and the second cover plate 2112 may be an "L" shape, a "U" shape or a "-" shape, etc. For example, the first housing may be a structure with a rectangular cavity formed by buckling two cover plates having the "L" shape together, or a structure with a rectangular cavity formed by docking two cover plates having the "U" shape together, or a structure with a rectangular cavity formed by docking a cover plate having the "U" shape with a cover plate having the "-" shape together, which is not specifically limited herein.

In some embodiments, the support blocks 281 are fixed to the first cover plate 2111 and/or the second cover plate 2112, and the primary capillary structure 244 and the secondary capillary structure 245 are fixed to the first cover plate 2111 and/or the second cover plate 2112. In the present disclosure, the support blocks 281 may be integrated with the first cover plate 2111 or the second cover plate 2112. The support blocks 281 may also be independent structures from the first cover plate 2111 or the second cover plate 2112, and the support blocks 281 may be fixed to the first cover plate 2111 or the second cover plate 2112 by welding, bonding, or the like. The primary capillary structure 244 and the secondary capillary structure 245 may be fixed to the first cover plate 2111 or the second cover plate 2112, or the primary capillary structure 244 and the secondary capillary structure 245 may be fixed to each of the first cover plate 2111 or the second cover plate 2112, to ensure the stability of the primary capillary structure 244 and the secondary capillary structure 245.

It should be noted that the first side wall 221 and the second side wall 222 in the first embodiment are configured as a portion of the first cover plate 2111, or the first side wall 221 and the second side wall 222 in the first embodiment are configured as a portion of the second cover plate 2112, or one of the first side wall 221 and the second side wall 222 in the first embodiment is configured as a portion of the first cover plate 2111, and another one of the first side wall 221 and the second side wall 222 is configured as a portion of the second cover plate 2112.

In some embodiments, as shown in FIG. 27, the inner wall of the first housing 21c is provided with an anticorrosive film layer 290 for preventing the working medium from contacting the inner wall of the first housing 21c to cause corrosion to the first housing 21c.

In some embodiments, as shown in FIG. 27, a surface of the anticorrosive film layer 290 facing the first cavity is provided with a hydrophilic film layer 291 for improving the flowability of the working medium on the inner wall of the first housing 21c, so as to improve the heat exchange efficiency.

Specifically, as shown in FIG. 27, when the first housing 21c is formed by butting the first cover plate 2111 and the second cover plate 2112, a first anticorrosive film layer may be provided on the inner wall of the first cover plate 2111, and a first hydrophilic film layer may be provided on the surface of the first anticorrosive film layer facing the first cavity; and a second anticorrosive film layer may be provided on the inner wall of the second cover plate 2112, and a second hydrophilic film layer may be provided on the surface of the second anticorrosive film layer facing the first cavity, where the first anticorrosive film layer and the second anticorrosive film layer may be the same in material and structure, and the first hydrophilic film layer and the second hydrophilic film layer may be the same in material and structure.

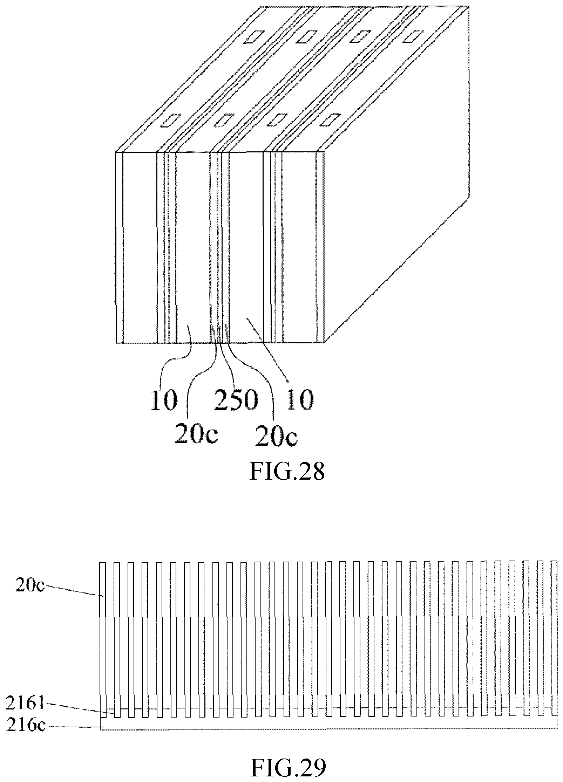

In some embodiments, as shown in FIG. 28, two soaking partitions 20c may be provided between adjacent ones of the batteries 10, and a buffer layer 250 may be provided between two adjacent ones of the soaking partitions 20c. Since the battery 10 may squeeze the soaking partition 20c during expansion of the battery 10 to affect the heat exchange performance of the soaking partition 20c, the two soaking partitions 20c may be provided between the two adjacent batteries 10, and the buffer layer 250 may be provided between the two adjacent batteries 10, so that the expansion force of the battery 10 is slowly released by the buffer layer 250, thereby preventing the expansion force of the battery 10 from squeezing and damaging the soaking partitions 20c.

The soaking partition assembly further includes a soaking bottom plate 216c provided on the bottom surface of the battery 10, where the soaking bottom plate 216c can heat exchange the bottom surface of the battery on the one hand, and the soaking bottom plate 216c can be used to support the soaking partitions 20c on the other hand. The structure of the soaking bottom plate 216c may be the same as that of the soaking partition 20c, and a specific structure of the soaking bottom plate 216c may be described with reference to the specific structure of the soaking partition 20c, which is not repeatedly described herein.

In some embodiments, as shown in FIG. 29, a plurality of grooves 2161 are provided at a side of the soaking bottom plate 216c toward the soaking partition 20c, the plurality of grooves 2161 are extended in the second direction, and the plurality of grooves 2161 are parallel and spaced apart from each other. An end of each of the soaking partitions 20c close to the soaking bottom plate 216c is inserted into corresponding one of the grooves 2161, and each of the grooves 2161 is connected with corresponding one of the soaking partitions 20c to ensure the stability of the soaking partitions 20c.

In some embodiments, as shown in FIG. 29, the first cavity of the soaking partition 20c is a separate closed structure in which the working fluid is disposed. Specifically, the working medium may be disposed at the bottom portion of the first cavity, i.e., one end of the first cavity close to the soaking bottom plate 216c. When the soaking partition 20c is operated, the working medium located at the bottom portion of the first cavity is sucked from the bottom portion of the primary capillary structure 244 and the secondary capillary structure 245 and diffused from the bottom portion 202 to the top portion 201. The liquid working medium absorbs heat from the battery 10 during the diffusion process of the liquid working medium to form and diffuse a vapor working medium into the first cavity. When the vapor working medium is circulated to the bottom portion of the first cavity, the vapor working medium is cooled as the liquid working medium again, and the liquid working medium is sucked, diffused, heat-exchanged, and vaporized again from the bottom portion of the primary capillary structure 244 and the secondary capillary structure 245. In the embodiments, both the vapor-liquid conversion and circulation of the working medium are performed in the first cavity.

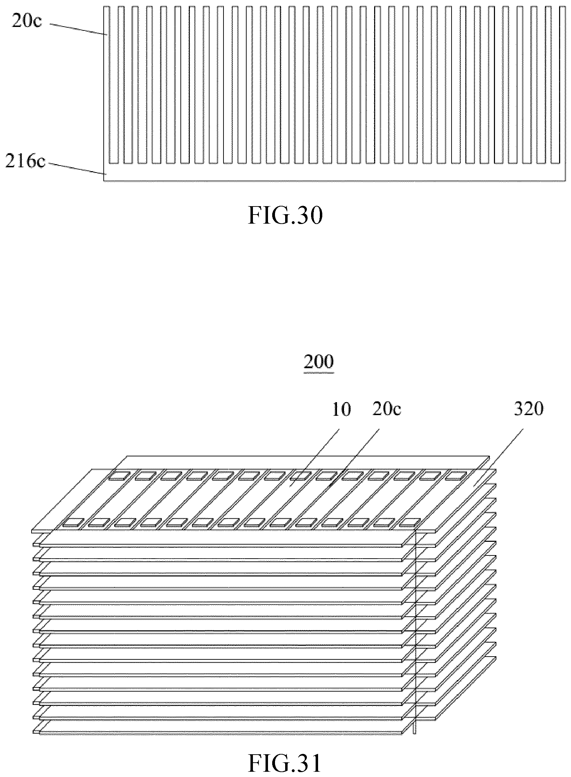

In some embodiments, as shown in FIG. 30, the soaking bottom plate 216c includes a second housing having a second cavity, where the first cavity is in communication with the second cavity, and the working fluid is disposed within the second cavity. Specifically, the soaking partition 20c may be integrated with the soaking bottom plate 216c, and the first cavity is in communication with the second cavity. In the present embodiments, the primary capillary structure 244 and the secondary capillary structure 245 in the soaking partition 20c suck the working medium from the soaking bottom plate 216c, and the working medium is diffused into the first cavity, and becomes a vapor working medium after heat absorption. When the vapor working medium is circulated to the bottom portion of the first cavity, the vapor working medium is cooled as a liquid working medium and flowed into the second cavity again, and then recycled again.

In some embodiments, the soaking partition 20c may be an independent structure from the soaking bottom plate 216c, and the soaking partition 20c may be fixed to the soaking bottom plate 216c by welding or bonding.

As shown in FIGS. 24 and 25, the soaking partition assembly further includes soaking side plates 240 positioned at both opposite sides of the battery in the second direction and abutting against the first side surface or the second side surface of the battery 10 to perform heat exchange with the side surface of the battery 10, thereby further improving the heat exchange efficiency of the battery module. The structure of the soaking side plate 240 may be the same as that of the soaking partition 20c, and the specific structure of the soaking side plate 240 may be described with reference to the specific structure of the soaking partition 20c, which is not repeatedly described herein.

As shown in FIG. 24, the battery module further includes a heat exchanger 300 provided at a side of the soaking bottom plate 216c away from the soaking partition 20c.

In some embodiments, as shown in FIG. 25, the heat exchanger 300 may be a liquid cooling plate 310, where one side surface of the liquid cooling plate 310 is closely bonded to one side surface of the soaking bottom plate 216c away from the battery module to perform heat exchange with the battery module, thereby further improving the heat exchange efficiency of the battery module. Specifically, the liquid cooling plate 310 is provided with a fluid passage therein, and both ends of the liquid cooling plate 310 are provided with an inlet and an outlet for a cooling medium, respectively, and the cooling medium is flowed through the fluid passage to carry away heat of the battery 10 and realize a heat exchange function. The material of the liquid cooling plate 310 may be a metal, such as an aluminum alloy, which is not limited herein. The cooling medium may be water, ethanol, acetone, or the like, which is not limited herein.

In some embodiments, the heat exchanger 300 may be a heat dissipation fin 320, where the heat dissipation fin 320 is provided on a side surface of the soaking bottom plate 216c away from the battery module to dissipate heat from the battery module, thereby further improving the heat exchange efficiency of the battery module. The material of the heat dissipation fin 320 may be a metal, such as an aluminum alloy, which is not limited herein.

Further, a heat conduction layer may be provided between the heat exchanger 300 and the soaking bottom plate 216c to improve the heat transfer efficiency between the heat exchanger 300 and the soaking bottom plate 216c. The material of the heat conduction layer may be, but is not limited to, heat conduction silicone grease. For example, the heat conduction layer may be provided between the liquid cooling plate 310 and the soaking bottom plate 216c, and the heat conduction layer may also be provided between the heat dissipation fin 320 and the soaking bottom plate 216c.

In some embodiments, as shown in FIG. 31, the battery module may include both a liquid cooling plate 310 and the heat dissipation fin 320, where the liquid cooling plate 310 may be disposed on a side of the soaking bottom plate 216c away from the battery module, and the heat dissipation fin 320 may be disposed on a side surface of the battery module or on a bottom surface of the battery module, which is not limited herein.

In summary, the present disclosure provides the battery module, including: the soaking partition assembly including the soaking partition, the primary capillary structure and the secondary capillary structure are spaced apart inside the soaking partition, the secondary capillary structure is used for absorbing a heat exchange medium between adjacent primary capillary structures, the primary capillary structure is combined with the secondary capillary structure inside the soaking partition, so that a coverage area of the capillary structure inside the soaking partition is increased, and the heat conduction rate of the heat exchange medium in the soaking partition can be accelerated to improve the heat exchange efficiency of the soaking partition. The present disclosure is to improve the heat transfer rate of the battery module by setting the soaking partition having a high heat transfer efficiency between adjacent two ones of the batteries, so as to improve the uniformity of the temperature of the battery cell and improve the overall performance of the battery module.

### A fourth embodiment

Some embodiments of the present disclosure provide a battery module 100, which may be a cylindrical battery module or a square battery module, and which includes a plurality of batteries 10 arranged in a matrix.

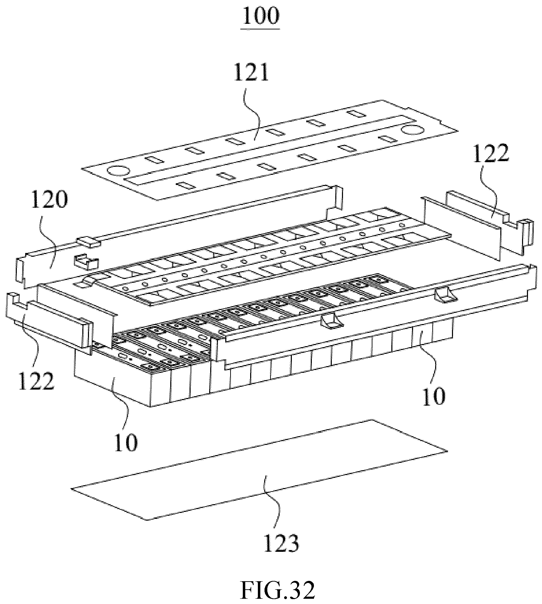

Referring to FIG. 32, the battery module 100 includes a plurality of batteries 10 and a first direction and a second direction perpendicular to the first direction, where a plurality of batteries 10 are arranged side by side in the first direction to form a group of batteries, and a plurality of groups of batteries 10 are arranged side by side in the second direction to form a layer of battery module 100. In an alternative example, the battery module 100 may include a single-layer battery module, a double-layer battery module, or a multi-layer battery module.

The battery module 100 includes a case body 120 and a case cover 121, where a plurality of batteries 10 are arranged in a matrix inside the case body 120, and the case cover 121 is used to cover an opening end of the case body 120. The case body 120 further includes a bottom plate 123 disposed opposite to the case cover 121, and further includes a plurality of side plates 122, where a top portion of each of the plurality of side plates 122 is attached to the case cover 121, and a bottom portion of the each of the plurality of side plates 122 is attached to the bottom plate 123.

In the battery module 100, a plurality of batteries 10 are arranged in sequence to form a group of batteries, where adjacent ones of the batteries 10 are connected to each other by bonding to form a solid connection, and the bottom surface of each of the batteries 10 is bonded to the bottom plate 123 by bonding. In the related art, the battery 10 is bonded to the bottom plate 123 by an adhesive, that is, the adhesive is applied to the bottom plate 123 or the bottom portion of the battery 10, so that an adhesive layer 70 is formed between the battery 10 and the bottom plate 123, and all of the bottom surface 132 of the battery 10, the bottom plate 123, and the adhesive layer 70 formed between the battery 10 and the bottom plate 123 are plane structures. In the process of using the battery module 100, an internal environment and an external environment of the battery module 100 affect the stability of the adhesive layer 70. For example, the internal temperature of the battery module 100 is increased, and the external environment of the battery module 100 is rocked or shaken, which causes the adhesive layer 70 between the battery 10 and the bottom plate 123 to be offset in position and further damages the stability of bonding the battery 10 to the bottom plate 123. The battery module 100 and the bottom plate 123 are loosened over time, thereby affecting the normal operation of the battery module 100.

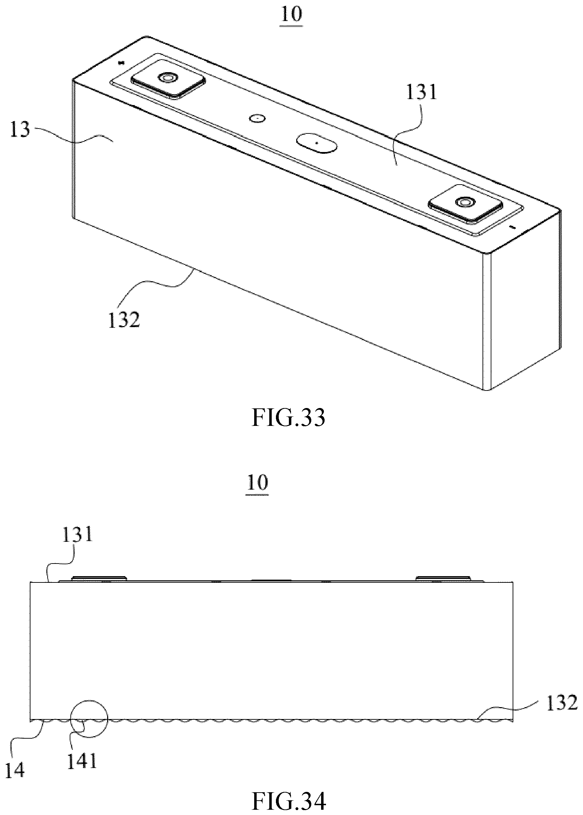

In some embodiments provided in the present disclosure, a bottom structure of a shell 13 of the battery 10 is optimized, so that a stable connection is formed between the battery 10 and the bottom plate 123. Referring to FIGS. 33 to 42, the battery 10 includes a shell 13 having opposite top and bottom surfaces 131 and 132, where the bottom surface 132 is further provided with a reinforcing structure 14 for connection with the bottom plate 123, the reinforcing structure 14 has a surface area greater than an area of an orthographic projection of the reinforcing structure on the top surface 131, thereby increasing a bonding area between the battery 10 and the bottom plate 123. As such, a stable connection is formed between the battery 10 and the bottom plate 123, and the battery 10 and the bottom plate 123 are not loosened in the case of rocking or shaking the battery module 100 or the influence of the high-temperature environment inside the battery module 100.

In some embodiments provided in the present disclosure, the reinforcing structure 14 includes a plurality of first projections 141 or a plurality of recesses. The bottom surface 132 of the battery 10 is provided with the reinforcing structure 14 disposed in a non-planar structure having a plurality of projections or recesses, and the reinforcing structure 14 is bonded to the bottom plate 123. On the one hand, a concave-convex or recess structure has a larger surface area with respect to the planar structure, thereby increasing the bonding area between the battery 10 and the bottom plate 123. On the other hand, the adhesive layer 70 between the bottom surface 132 of the battery 10 and the bottom plate 123 is configured in a non-planar structure, and the structure of the non-planar adhesive layer 70 is more compact and stable than the structure of the planar adhesive layer 70, so that resistance is generated between the non-planar adhesive layer 70 and the bottom surface 132 of the battery 10 in the case of rocking or shaking of the battery module 100 or the influence of the high-temperature environment inside the battery module 100, thereby preventing the adhesive layer 70 from loosening.

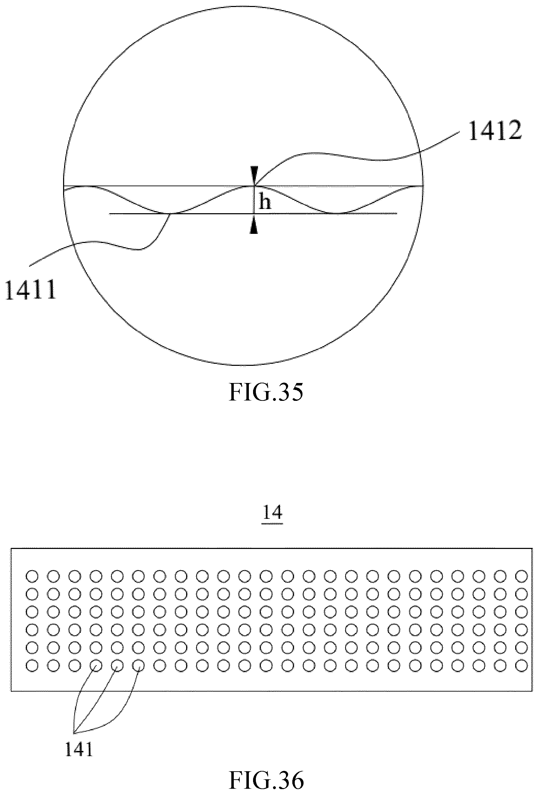

Further referring to FIGS. 34 and 35, in some embodiments provided in the present disclosure, the reinforcing structure 14 includes a plurality of first projections 141, and the plurality of first projections 141 are configured to be extended in a wavy configuration. The bonding area between the battery 10 and the bottom plate 123 is further increased by providing a plurality of successive first projections 141.

Further, as shown in FIG. 35, each of the first projections 141 includes a wave peak 1411 and a wave valley 1412, where a height difference h between the wave peak 1411 and the wave valley 1412 of each of a plurality of first projections 141 is the same, the wave peak 1411 is the highest point at which the reinforcing structure 14 is protruded relative to a plane on which the bottom surface 132 is located, and the wave valley 1412 is the lowest point at which the reinforcing structure 14 is protruded or recessed relative to a plane on which the bottom surface 132 is located, and a gap between the wave peak 1411 and the wave valley 1412 adjacent to the wave peak 1411 is used to fill the adhesive. As such, a bonding strength between each of the first projections 141 of the battery 10 and the bottom plate 123 can be controlled by controlling the height difference between the wave peak 1411 and the wave valley 1412. If the height difference between the wave peak 1411 and the wave valley 1412 of a portion of first projections 141 is smaller, the adhesive filled in the portion of first projections 141 may be lower, which further causes the bonding strength between the portion of the first projections 141 and the bottom plate 123 to be lower, so that the portion of the first projections 141 and the bottom plate 123 may be loosened easily.

Further referring to FIGS. 36-42, in some embodiments provided in the present disclosure, the reinforcing structure 14 includes a plurality of first projections 141 or first recesses, where the plurality of first projections 141 or first recesses may also have a circular, triangular, or quadrilateral cross-section.

As shown in FIG. 36, when the cross section of the plurality of first projections 141 or the first recesses are provided in a circular shape, a spacing between adjacent first projections 141 or first recesses may be set as small as possible, thereby facilitating the provision of the plurality of first projections 141 or first recesses on the bottom surface 132 of the battery 10.

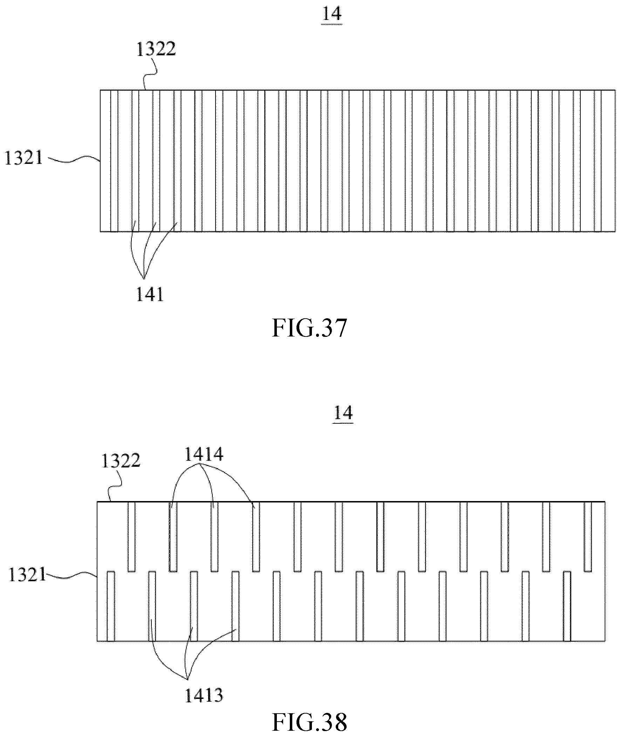

As shown in FIG. 37, when the cross section of the plurality of first projections 141 or first recesses are provided in a rectangular shape, the first projections 141 are taken as an example for illustration, each of the first projections 141 may be extended along the first side 1321 of the bottom surface of the battery 10, and each of the first projections 141 may also be extended along the second side 1322 of the bottom surface, where the first side 1321 and the second side are vertically connected. Further, the length of each of the first projections 141 extending along the first side 1321 may be equal to the length of the first side 1321, or the length of each of the first projections 141 extending along the second side 1322 may be equal to the length of the second side 1322. Cross-sectional areas of the plurality of first projections 141 are substantially the same, and spacings of the adjacent first projections 141 are substantially the same, thereby facilitating filling of the same volume of adhesive between the adjacent first projections 141.

As shown in FIG. 38, when the cross section of the plurality of first projections 141 or the first recesses are provided in a rectangular shape, the first projections 141 are taken as an example for illustration, the first projections 141 include a first type of projections 1413 and a second type of projections 1414, each of the first type of projections 1413 being adjacent to correspond one of the second type of projections 1414, where the first type of projections 1413 and the second type of projections 1414 both are extended along the first side 1321 or the first type of projections 1413 and the second type of projections 1414 both are extended along the second side 1322. An example in which the first type of projections 1413 and the second type of projections 1414 both are extend along the first side 1321 is taken for illustration, an orthographic projection of each of the first type of projections 1413 on the first side 1321 does not overlap the orthographic projection of corresponding one of the second type of projections 1414 on the first side 1321, and the sum of the length of each of the first type of projections 1413 extending along the first side 1321 and the length of corresponding one of the second type of projections 1414 extending along the first side 1321 is equal to the length of the first side 1321. The spacing between adjacent ones of the first type of projections 1413 remains the same, and the spacing between adjacent ones of the second type of projections 1414 remains the same, so that the capacity of the adhesive that can be filled between the adjacent projections 1413 is substantially the same, and the capacity of the adhesive that can be filled between the adjacent projections 1414 is substantially the same.

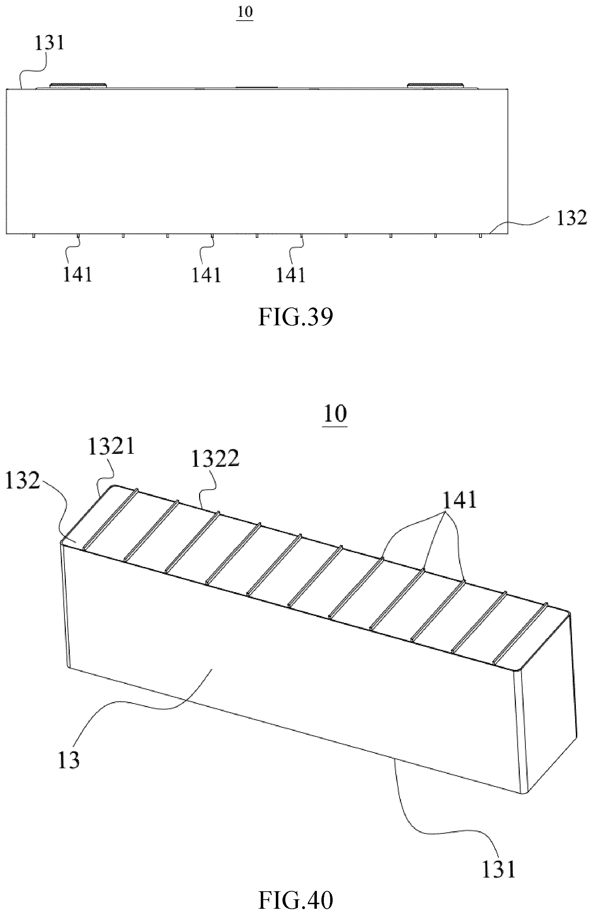

Further referring to FIGS. 39 and 40, when the battery 10 is configured as a square battery, the reinforcing structure 14 is configured as a plurality of first projections 141, and the bottom surface 132 of the battery 10 includes a first side 1321 and a second side 1322 vertically connected with the first side 1321, where the length of the first side 1321 is less than the length of the second side 1322, and the plurality of first projections 141 are extended in an extending direction of the first side 1321, thereby facilitating the provision of a plurality of projections on the bottom surface 132 of the battery 10.

In other embodiments provided in the present disclosure, the reinforcing structure 14 includes a bevel, where the bevel may be a flat bevel, i.e., each local slope of the bevel remains fixed, and the bevel may also be a ladder-shaped extended bevel, i.e., different local slopes of the bevel are different. When the reinforcing structure 14 is provided as the bevel, the surface area of the bevel is greater than an area of an orthographic projection of the bevel, thereby increasing the bonding area between the reinforcing structure 14 and the bottom plate 123. Further, when the reinforcing structure 14 is provided as the ladder-shaped extended bevel, the adhesive layer 70 formed between the reinforcing structure 14 and the bottom plate 123 is configured in a non-planar structure, so that resistance is formed between the adhesive layer and the outer surface of the reinforcing structure 14, thereby preventing the adhesive layer from loosening.

The reinforcing structure 14 is provided on the bottom surface 132 of the shell 13. When the reinforcing structure 14 is provided as a plurality of first projections 141, the reinforcing structure 14 may be integrally formed with the housing 13, or the reinforcing structure 14 may be connected to the bottom surface 132 of the shell 13 by welding.

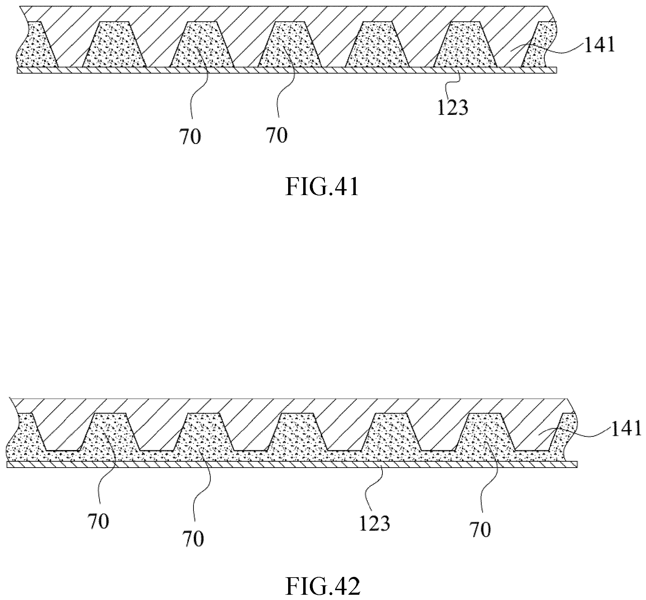

Further referring to FIGS. 41 and 42, the battery 10 is bonded to the bottom plate 123 by the reinforcing structure 14, and the bottom plate 123 of the battery module 100 is generally integrated with the liquid cooling plate, so that the bottom plate 123 of the battery module 100 has a heat dissipation function in addition to supporting and fixing the battery 10. The bottom surface 132 of the battery 10 is provided in a non-planar structure, thereby facilitating increasing of the contact area between the bottom surface 132 of the battery 10 and the bottom plate 123 and increasing of the heat transfer efficiency between the battery 10 and the bottom plate 123.

Further, the adhesive between the battery 10 and the bottom plate 123 is provided as a heat conduction adhesive, and the heat conduction adhesive can quickly conduct the heat of the battery 10 to the bottom plate 123 with respect to the conventional adhesive, thereby improving the heat dissipation efficiency of the battery module 100. The heat conduction adhesive not only has a bonding function, but also can quickly transfer heat from the battery 10 to the bottom plate 123.

As shown in FIG. 41, in some embodiments provided in the present disclosure, the reinforcing layer includes a plurality of first projections 141, the cross section of each of the first projections 141 is provided in a trapezoidal configuration, the top end surface of each of the first projections 141 is in contact with the bottom plate 123, and the heat conduction adhesive is filled in the gap between the adjacent first projections 141, where each of the plurality of first projections 141 is in contact with the bottom plate 123, and the bottom plate 123 can directly support the battery 10. With respect to the transition support of the battery 10 by the adhesive layer 70, the bottom plate 123 directly supports the battery 10, so that the support strength can be increased. Further, the first projections 141 have sufficient projection heights, so that the adjacent first projections 141 can be filled with sufficient heat conduction adhesive to improve the stability of bonding the bottom plate 123 to the battery 10.

Further referring to FIG. 42, in yet another embodiment of the present disclosure, the reinforcing layer includes a plurality of first projections 141, the cross section of each of the first projections 141 is provided in a trapezoidal configuration. Unlike the above-described embodiments, the top surface 131 of each of the first projections 141 is not in direct contact with the bottom plate 123, a portion of the heat conduction adhesive is filled in the gap between the adjacent first projections 141, and another portion of the heat conduction adhesive is filled in the gap between each of the first projections 141 and the bottom plate 123, where the height of each of the first projections 141 can be appropriately reduced, which, on the one hand, facilitates the miniaturization of the battery module 100, and, on the other hand, facilitates increasing of the contact area between the heat conduction adhesive and each of the first projections 141, thereby facilitating improvement of the heat dissipation efficiency.

In other embodiments provided in the present disclosure, a side surface of the bottom plate 123 for supporting the battery 10 is also configured in a non-planar structure, and a plurality of second projections or a plurality of second recesses are provided on the bottom plate 123, where the plurality of second recesses are cooperated with the plurality of first projections 141, or each of the second projections may be inserted into a portion of a gap between the adjacent first projections 141, or each of the plurality of second projections may be inserted into corresponding one of the plurality of first recesses. Compared with the adhesive layer 70 formed between the two planar surfaces, the adhesive layer 70 formed between the two non-planar surfaces has a closer bonding effect, while the heat transfer area formed between the two non-planar surfaces may be further increased, thereby increasing the heat transfer area between the battery 10 and the bottom plate 123.

Some embodiments of the present disclosure further provide a battery pack: including a plurality of battery modules, which may be provided in series connection manner, or in a parallel connection manner, or in a hybrid connection manner, so as to meet a dosage requirement of the battery pack used in an electrical device or in an electric tool.

## Claims

1. A soaking partition for a battery module, the battery module comprising the soaking partition, one or more batteries, and a direct cooling plate, and the soaking partition being disposed between any two ones of the batteries, wherein the soaking partition comprises:
a first housing provided with a first cavity, wherein at least a portion of the first cavity is configured as a closed cavity, and a wall surrounding the closed cavity comprises a first side wall in contact with one of the two batteries and a second side wall in contact with another one of the two batteries;
a cooling medium placed in the closed cavity; and
a capillary element bonded to at least a portion of an inner surface of the first side wall or at least a portion of an inner surface of the second side wall, wherein at least a portion of the capillary element is in contact with the cooling medium;
wherein the first housing comprises opposite first and second ends, and the second end of the first housing is connected to the direct cooling plate.

2. The soaking partition of claim 1, wherein the first end of the first housing is provided with a top wall, the second end of the first housing is provided with an opening end, the top wall is connected to a top portion of the first side wall and a top portion of the second side wall, and the opening end is connected to the direct cooling plate and covered by the direct cooling plate.

3. The soaking partition of claim 1, wherein the first end of the first housing is provided with a top wall, and the second end of the first housing is provided with a bottom wall, the top wall is connected to a top portion of the first side wall and a top portion of the second side wall, the bottom wall is connected to a bottom portion of the first side wall and a bottom portion of the second side wall, and the bottom wall is connected to the direct cooling plate.

4. The soaking partition of claim 3, wherein an area of an orthographic projection of the bottom wall on the direct cooling plate is greater than an area of an orthographic projection of the top wall on the direct cooling plate.

5. The soaking partition of claim 1, wherein an end of the capillary element is surrounded by the cooling medium.

6. The soaking partition of claim 5, wherein the first side wall comprises a first inner surface and the second side wall comprises a second inner surface; and
the capillary element further comprises a first capillary element and a second capillary element, wherein the first capillary element is bonded to the first inner surface and configured to diffuse the cooling medium in a liquid state on the first inner surface, and the second capillary element is bonded to the second inner surface and configured to diffuse the cooling medium in a liquid state on the second inner surface.

7. The soaking partition of claim 1, wherein a first partition and a second partition are spaced apart in an inner cavity of the first housing, all of the first side wall, the first partition, the second partition, and the second side wall are sequentially spaced apart in parallel, the inner cavity of the first housing comprises a first cavity, a second cavity, and a third cavity sequentially spaced apart, the first cavity is formed by sealing the first side wall and the first partition, the second cavity is formed by enclosing the first partition and the second partition, and the third cavity is formed by sealing the second partition and the second side wall; and
the cooling medium comprises a cooling equalizing medium and a direct cooling medium, wherein the cooling equalizing medium and a first capillary element are disposed inside the first cavity, the cooling equalizing medium and a second capillary element are disposed inside the third cavity, and the direct cooling medium is disposed inside the second cavity.

8. The soaking partition of claim 7, wherein the cooling equalizing medium comprises a liquid and is configured to be circulated between a liquefied state and a vaporized state; and/or, the direct cooling medium comprises a liquid or air and configured to flow into an inside of the second cavity and to flow out to an outside of the second cavity.

9. The soaking partition of claim 8, further comprising: a first inlet for the cooling equalizing medium to enter the inside of the second cavity, and a first outlet for the second cooling medium to flow out to the outside of the second cavity; wherein the first inlet is in communication with a second inlet of the direct cooling plate.

10. The soaking partition of claim 9, wherein one of the first inlet and the first outlet is disposed on the first partition and another one of the first inlet and the first outlet is disposed on the second partition.

11. A battery module, comprising:
the soaking partition of any one of claims 1-10; and
a direct cooling plate connected to one end of the soaking partition and comprising a top cover and a base connected with the top cover, wherein a fluid passage is formed by defining the base and the top cover, a plurality of protrusions are provided at a side surface of the top cover away from the soaking partition, and the protrusions are provided within the fluid passage.

12. A battery module, comprising:
the soaking partition of any one of claims 1-10;
a direct cooling plate connected to one end of the soaking partition and comprising a second housing provided with a hollow accommodating cavity;
a passage tube disposed in the accommodating cavity, wherein a fluid passage is formed by limiting an inner cavity of the passage tube and configured to flow a direct cooling medium; and
a heat conduction medium for filling a gap between the passage tube and the second housing.

13. A direct cooling plate connected to one end of the soaking partition of any one of claims 1-10, comprising:
a second housing provided with a hollow accommodating cavity;
a passage tube disposed in the accommodating cavity, wherein a fluid passage is formed by limiting an inner cavity of the passage tube and configured to flow a direct cooling medium; and
a heat conduction medium for filling a gap between the passage tube and the second housing.

14. A battery module, comprising:
a group of batteries comprising a plurality of batteries arranged in a first direction; and
a soaking partition assembly comprising a soaking partition disposed between adjacent ones of the batteries, wherein the soaking partition comprises the soaking partition of any one of claims 1-10, a capillary element of the soaking partition comprises a primary capillary structure and a secondary capillary structure, the primary capillary structure and the secondary capillary structure are spaced apart in a first cavity of the soaking partition, and a cross-sectional area of the primary capillary structure is greater than a cross-sectional area of the secondary capillary structure.

15. A battery module, comprising:
a bottom plate;
a plurality of batteries each including a shell, wherein the shell has opposite top and bottom surfaces, the bottom surface is further provided with a reinforcing structure for connection to the bottom plate, and a surface area of the reinforcing structure is greater than an area of an orthographic projection of the reinforcing structure on the top surface; and
a soaking partition disposed between any two ones of the batteries, where the soaking partition is the soaking partition of any one of claims 1-10.
